# EUROPEAN PATENT APPLICATION

(11) **EP 4 325 928 A1**
(43) Date of publication of application: **21.02.2024**
(21) Application number: 22810418.8
(22) Date of filing: 17.05.2022
(51) Int. Cl.: H04W 28/02

(54) **NETWORK SELECTION METHOD AND APPARATUS**

(30) Priority: 23.05.2021 CN 202110561863; 06.08.2021 CN 202110904003
(71) Applicant: Huawei Technologies Co., Ltd., Longgang Shenzhen, Guangdong 518129 (CN)
(72) Inventor: GUO, Longhua, Shenzhen, Guangdong 518129 (CN); PREMAN, Vishnu, Shenzhen, Guangdong 518129 (CN); WU, Rong, Shenzhen, Guangdong 518129 (CN)
(74) Representative: Goddar, Heinz J.
(86) International application number: PCT/CN2022/093345
(87) International publication number: WO 2022/247691

(57) **Abstract**

A network selection method and apparatus are provided. The method includes: A terminal device receives a broadcast message from a non-forbidden PLMN and a broadcast message from a forbidden PLMN. The broadcast message of the forbidden PLMN includes a disaster occurrence indication, and the disaster occurrence indication indicates that a disaster occurs on the non-forbidden PLMN. The terminal device requests, based on the disaster occurrence indication, to register with the forbidden PLMN, when the terminal device fails to register with the non-forbidden PLMN. According to the foregoing method, the terminal device can select a network that ensures a normal service, and service interruption of the terminal device caused by the disaster that occurs on the non-forbidden PLMN can be effectively reduced.

## Description

### CROSS-REFERENCE TO RELATED APPLICATIONS

This application claims priority to Chinese Patent Application No. 202110561863.6, filed with the China National Intellectual Property Administration on May 23, 2021 and entitled "NETWORK SELECTION METHOD AND APPARATUS", which is incorporated herein by reference in its entirety.

This application claims priority to Chinese Patent Application No. 202110904003.8, filed with the China National Intellectual Property Administration on August 6, 2021 and entitled "NETWORK SELECTION METHOD AND APPARATUS", which is incorporated herein by reference in its entirety.

### TECHNICAL FIELD

Embodiments of this application relate to the field of wireless communication, and in particular, to a network selection method and apparatus.

### BACKGROUND

If a service of a terminal device is interrupted by an emergency such as a disaster that occurs on a network (for example, a home public land mobile network (home public land mobile network, HPLMN) and/or a visited PLMN (visited PLMN, VPLMN)) of the terminal device, the terminal device may roam to a cell of a disaster roaming PLMN (PLMN with disaster condition) to for a normal service, where the disaster roaming PLMN is in a terminal forbidden PLMN (forbidden PLMN) list.

Specifically, after the disaster occurs on the network of the terminal device, the disaster roaming PLMN notifies the terminal device to select another PLMN for registration. The disaster roaming PLMN may send a broadcast message including a disaster occurrence indication, where the disaster occurrence indication indicates the PLMN on which the disaster occurs.

However, currently, there is no solution to how a terminal device performs network selection when the terminal device receives, in a cell search process, broadcast messages/a broadcast message of an HPLMN and/or a VPLMN and a broadcast message that is of a forbidden PLMN and that includes a disaster occurrence indication.

### SUMMARY

Embodiments of this application provide a network selection method and apparatus, to resolve a problem of how a terminal device performs network selection when the terminal device receives, in a cell search process, broadcast messages/a broadcast message of a home PLMN and/or a visited PLMN and a broadcast message that is of a forbidden PLMN and that includes a disaster occurrence indication.

According to a first aspect, this application provides a network selection method. The method includes: A terminal device receives a broadcast message from a non-forbidden PLMN and a broadcast message from a forbidden PLMN. The broadcast message of the forbidden PLMN includes a disaster occurrence indication, and the disaster occurrence indication indicates that a disaster occurs on the non-forbidden PLMN. The terminal device requests, based on the disaster occurrence indication, to register with the forbidden PLMN, when the terminal device fails to register with the non-forbidden PLMN.

According to the foregoing method, after the registration with the non-forbidden PLMN fails, the terminal device does not directly enter a restricted mode, but attempts, based on the disaster occurrence indication included in the broadcast message of the forbidden PLMN, to register with a forbidden PLMN, so that the terminal device selects a network that ensures a normal service, and service interruption of the terminal device caused by the disaster that occurs on the non-forbidden PLMN can be effectively reduced.

It should be noted that, in a cell search process, the terminal device receives the broadcast message of the forbidden PLMN and the broadcast message of the non-forbidden PLMN, and an order of receiving the broadcast message of the forbidden PLMN and the broadcast message of the non-forbidden PLMN is not limited herein. When the terminal device successfully registers with the forbidden PLMN, the forbidden PLMN provides the normal service for the terminal device, and the terminal device does not need to enter the restricted mode.

It should be noted that the forbidden PLMN that sends the disaster occurrence indication may be the same as or different from the forbidden PLMN that the terminal device attempts to register with. Alternatively, the forbidden PLMN corresponding to the broadcast message that includes the disaster occurrence indication and that is parsed by the terminal device may be the same as or different from the forbidden PLMN that the terminal device attempts to register with.

In a possible design, the terminal device requests to register with the non-forbidden PLMN. The terminal device determines, based on one or both of the following conditions, that the registration with the non-forbidden PLMN fails: The terminal device receives, from the non-forbidden PLMN, a response indicating that the registration with the non-forbidden PLMN fails. Alternatively, the terminal device receives no response from the non-forbidden PLMN within preset duration.

In a possible design, before the terminal device requests, based on the disaster occurrence indication, to register with the forbidden PLMN, when the terminal device receives the response indicating that the registration with the non-forbidden PLMN fails, the terminal device determines that integrity protection verification on the response indicating that the registration with the non-forbidden PLMN fails is unsuccessful or that no integrity protection is performed on the response indicating that the registration with the non-forbidden PLMN fails.

According to the foregoing design, additional determining and registration attempts of the terminal device in the forbidden PLMN can be avoided, and unnecessary overheads of the terminal device can be reduced.

In a possible design, when the terminal device determines that the integrity protection verification on the response indicating that the registration with the non-forbidden PLMN fails is unsuccessful or that no integrity protection is performed on the response indicating that the registration with the non-forbidden PLMN fails, the terminal device further needs to determine that a reject cause value carried in the response indicating that the registration with the non-forbidden PLMN fails does not include a cause value unrelated to network selection.

According to the foregoing design, additional determining and registration attempts of the terminal device in the forbidden PLMN can be avoided, and unnecessary overheads of the terminal device can be reduced.

In a possible design, the cause value unrelated to network selection is a reject cause value 3 or a reject cause value 6. The reject cause value 3 indicates that the terminal device is an unauthorized terminal device, and the reject cause value 6 indicates that the terminal device is an unauthorized mobile equipment.

In a possible design, when the terminal device determines that the integrity protection verification on the response indicating that the registration with the non-forbidden PLMN fails is unsuccessful or that no integrity protection is performed on the response indicating that the registration with the non-forbidden PLMN fails, the terminal device determines that a reject cause value carried in the response indicating that the registration with the non-forbidden PLMN fails includes a cause value related to network selection, and determines that there is no other available non-forbidden PLMN.

According to the foregoing design, additional determining and registration attempts of the terminal device in the forbidden PLMN can be avoided, and unnecessary overheads of the terminal device can be reduced.

In a possible design, the cause value related to network selection is a reject cause value 11 or a reject cause value 13. The reject cause value 11 indicates that the terminal device is not allowed to roam in the non-forbidden PLMN, and the reject cause value 13 indicates that the terminal device is not allowed to roam in a current tracking area TA in the non-forbidden PLMN.

In a possible design, before the terminal device requests, based on the disaster occurrence indication, to register with the forbidden PLMN, the terminal device increases a value of a PLMN-specific attempt counter by 1 each time the terminal device receives the response indicating that the registration with the non-forbidden PLMN fails; and the terminal device determines that the PLMN-specific attempt counter reaches a maximum value.

According to the foregoing design, additional determining and registration attempts of the terminal device in the forbidden PLMN can be avoided, and unnecessary overheads of the terminal device can be reduced.

In a possible design, when the terminal device determines that the PLMN-specific attempt counter reaches the maximum value, the terminal device further needs to determine that there is no other available non-forbidden PLMN.

According to the foregoing design, additional determining and registration attempts of the terminal device in the forbidden PLMN can be avoided, and unnecessary overheads of the terminal device can be reduced.

In a possible design, signal quality of the non-forbidden PLMN is better than signal quality of the forbidden PLMN.

In a possible design, the forbidden PLMN belongs to a first forbidden PLMN set, and the first forbidden PLMN set includes a forbidden PLMN for a disaster check.

According to the foregoing design, a range of a broadcast message used by the terminal device to perform the disaster check can be reduced, and a network selection speed can be increased.

In a possible design, the broadcast message of the forbidden PLMN includes a disaster roaming indication, and the disaster roaming indication indicates the terminal device to select the forbidden PLMN to perform disaster roaming.

According to the foregoing design, the terminal device can determine, based on the disaster roaming indication, the forbidden PLMN that provides the disaster roaming.

In a possible design, the forbidden PLMN belongs to a second forbidden PLMN set, and the second forbidden PLMN set includes a forbidden PLMN for disaster roaming.

According to the foregoing design, the terminal device can attempt, based on the forbidden PLMN for disaster roaming, to register with the forbidden PLMN for disaster roaming.

In a possible design, before the terminal device requests to register with the forbidden PLMN, the terminal device determines that the terminal device supports minimization of service interruption.

In a possible design, the terminal device determines, based on version information of the terminal device or capability information of the terminal device, that the terminal device supports the minimization of service interruption.

In a possible design, when the terminal device fails to register with the forbidden PLMN, the terminal device camps on an acceptable cell whose signal quality meets a preset condition and that is in any PLMN, and enters a restricted mode.

In a possible design, the broadcast message of the non-forbidden PLMN includes broadcast information of a first PLMN and a broadcast message of a second PLMN. When the terminal device fails to register with the first PLMN and the terminal device fails to register with the second PLMN, the terminal device requests, based on the disaster occurrence indication, to register with the forbidden PLMN.

In a possible design, the terminal device determines that a priority of accessing the first PLMN is higher than a priority of accessing the second PLMN. When the terminal device fails to register with the first PLMN, the terminal device requests to register with the second PLMN.

According to a second aspect, this application provides a network selection apparatus. The apparatus includes a transceiver unit and a processing unit. The transceiver unit is configured to receive a broadcast message from a non-forbidden PLMN and a broadcast message from a forbidden PLMN. The broadcast message of the forbidden PLMN includes a disaster occurrence indication, and the disaster occurrence indication indicates that a disaster occurs on the non-forbidden PLMN. The processing unit is configured to request, based on the disaster occurrence indication by using the transceiver unit, to register with the forbidden PLMN, when registration with the non-forbidden PLMN fails.

In a possible design, the transceiver unit is further configured to request to register with the non-forbidden PLMN. The processing unit is configured to determine, based on one or both of the following conditions, that the registration with the non-forbidden PLMN fails: A response indicating that the registration with the non-forbidden PLMN fails is received from the non-forbidden PLMN by using the transceiver unit. Alternatively, no response is received from the non-forbidden PLMN within preset duration.

In a possible design, the processing unit is configured to: before requesting, based on the disaster occurrence indication, to register with the forbidden PLMN, when the response indicating that the registration with the non-forbidden PLMN fails is received, determine that integrity protection verification on the response indicating that the registration with the non-forbidden PLMN fails is unsuccessful or that no integrity protection is performed on the response indicating that the registration with the non-forbidden PLMN fails.

In a possible design, the processing unit is configured to determine that a reject cause value carried in the response indicating that the registration with the non-forbidden PLMN fails does not include a cause value unrelated to network selection.

In a possible design, the cause value unrelated to network selection is a reject cause value 3 or a reject cause value 6. The reject cause value 3 indicates that the apparatus is an unauthorized terminal device, and the reject cause value 6 indicates that the apparatus is an unauthorized mobile equipment.

In a possible design, the processing unit is configured to determine that a reject cause value carried in the response indicating that the registration with the non-forbidden PLMN fails includes a cause value related to network selection, and determine that there is no other available non-forbidden PLMN.

In a possible design, the cause value related to network selection is a reject cause value 11 or a reject cause value 13. The reject cause value 11 indicates that the apparatus is not allowed to roam in the non-forbidden PLMN, and the reject cause value 13 indicates that the apparatus is not allowed to roam in a current TA in the non-forbidden PLMN.

In a possible design, the processing unit is configured to: before requesting, based on the disaster occurrence indication, to register with the forbidden PLMN, increase a value of a PLMN-specific attempt counter by 1 each time the response indicating that the registration with the non-forbidden PLMN fails is received, and determine that the PLMN-specific attempt counter reaches a maximum value.

In a possible design, the processing unit is configured to determine that there is no other available non-forbidden PLMN.

In a possible design, signal quality of the non-forbidden PLMN is better than signal quality of the forbidden PLMN.

In a possible design, the forbidden PLMN belongs to a first forbidden PLMN set, and the first forbidden PLMN set includes a forbidden PLMN for a disaster check.

In a possible design, the broadcast message of the forbidden PLMN includes a disaster roaming indication, and the disaster roaming indication indicates the apparatus to select the forbidden PLMN to perform disaster roaming.

In a possible design, the forbidden PLMN belongs to a second forbidden PLMN set, and the second forbidden PLMN set includes a forbidden PLMN for disaster roaming.

In a possible design, the processing unit is further configured to: before requesting to register with the forbidden PLMN, determine that the apparatus supports minimization of service interruption.

In a possible design, the processing unit is configured to determine, based on version information of the apparatus or capability information of the apparatus, that the apparatus supports the minimization of service interruption.

In a possible design, the processing unit is configured to: when the registration with the forbidden PLMN fails, camp on an acceptable cell whose signal quality meets a preset condition and that is in any PLMN, and enter a restricted mode.

In a possible design, the broadcast message of the non-forbidden PLMN includes broadcast information of a first PLMN and a broadcast message of a second PLMN. The processing unit is configured to: when registration with the first PLMN fails and registration with the second PLMN fails, request, based on the disaster occurrence indication by using the transceiver unit, to register with the forbidden PLMN.

In a possible design, the processing unit is configured to determine that a priority of accessing the first PLMN is higher than a priority of accessing the second PLMN. The transceiver unit is configured to: when the registration with the first PLMN fails, request to register with the second PLMN.

It may be understood that, for a technical effect of any one of the second aspect and the possible designs of the second aspect, correspondingly refer to the technical effect of any one of the first aspect and the possible design of the first aspect. A repeated part is not described in detail again.

According to a third aspect, this application provides a network selection method. The method includes:

A terminal device receives a broadcast message from a non-forbidden PLMN and a broadcast message from a forbidden PLMN. When the terminal device fails to register with the non-forbidden PLMN and the broadcast message of the forbidden PLMN does not include a disaster occurrence indication, the terminal device camps on an acceptable cell whose signal quality meets a preset condition and that is in any PLMN, and enters a restricted mode.

According to the foregoing method, after the registration with the non-forbidden PLMN fails, the terminal device does not directly enter the restricted mode. When the terminal device determines that the broadcast message of the forbidden PLMN does not include the disaster occurrence indication, the terminal device enters the restricted mode.

According to a fourth aspect, this application provides a network selection apparatus. The apparatus includes a transceiver unit and a processing unit.

The transceiver unit is configured to receive a broadcast message from a non-forbidden PLMN and a broadcast message from a forbidden PLMN. The processing unit is configured to: when registration with the non-forbidden PLMN fails and the broadcast message of the forbidden PLMN does not include a disaster occurrence indication, camp on an acceptable cell whose signal quality meets a preset condition and that is in any PLMN, and enter a restricted mode.

According to a fifth aspect, this application further provides an apparatus. The apparatus may perform the foregoing method designs. The apparatus may be a chip or a circuit that can perform functions corresponding to the foregoing methods, or a device that includes the chip or the circuit.

In a possible implementation, the apparatus includes a memory configured to store computer-executable program code, and a processor. The processor is coupled to the memory. The program code stored in the memory includes instructions. When the processor executes the instructions, the apparatus or a device in which the apparatus is installed is enabled to perform the method in any one of the foregoing possible designs.

The apparatus may further include a communication interface. The communication interface may be a transceiver. Alternatively, if the apparatus is the chip or the circuit, the communication interface may be an input/output interface of the chip, for example, an input/output pin.

In a possible design, the apparatus includes corresponding functional units that are respectively configured to implement the steps in the foregoing methods. The functions may be implemented by hardware, or may be implemented by executing corresponding software by hardware. The hardware or the software includes one or more units that correspond to the foregoing functions.

According to a sixth aspect, an embodiment of this application provides a computer-readable storage medium. The computer-readable storage medium stores a computer program, and when the computer program is run on an apparatus, the method in any one of the foregoing possible designs is performed.

According to a seventh aspect, an embodiment of this application provides a computer program product. The computer program product includes a computer program, and when the computer program is run on an apparatus, the method in any one of the foregoing possible designs is performed.

### BRIEF DESCRIPTION OF DRAWINGS

FIG. 1 is a schematic diagram of an architecture of a mobile communication system according to an embodiment of this application;
FIG. 2 is a schematic diagram 2 of network selection according to an embodiment of this application;
FIG. 3 is a flowchart of network selection in a scenario 1 according to an embodiment of this application;
FIG. 4 is a schematic diagram 2 of network selection according to an embodiment of this application;
FIG. 5 is a flowchart of network selection in a scenario 2 according to an embodiment of this application;
FIG. 6 is a schematic diagram 3 of network selection according to an embodiment of this application;
FIG. 7 is an overview flowchart 1 of network selection according to an embodiment of this application;
FIG. 8 is an overview flowchart 2 of network selection according to an embodiment of this application;
FIG. 9 is a specific flowchart 1 of network selection according to an embodiment of this application;
FIG. 10 is a specific flowchart 2 of network selection according to an embodiment of this application;
FIG. 11 is a schematic diagram 1 of a structure of an apparatus according to an embodiment of this application; and
FIG. 12 is a schematic diagram 2 of a structure of an apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. In the specification, the claims, and the accompanying drawings of this application, the terms such as "first", "second" and corresponding term numerals are intended to distinguish between similar objects but do not necessarily indicate a specific order or sequence. It should be understood that the terms used in this manner are interchangeable in appropriate circumstances and this is merely a distinguishing manner used when objects with a same attribute are described in embodiments of this application. In addition, the terms "include", "contain" and any other variants mean to cover a non-exclusive inclusion, so that a process, a method, a system, a product, or a device that includes a series of units is not necessarily limited to those units, but may include other units not expressly listed or inherent to the process, the method, the product, or the device.

In the descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be in a singular form or a plural form.

The technical solutions in embodiments of this application may be applied to various communication systems, for example, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a future 6th generation communication system.

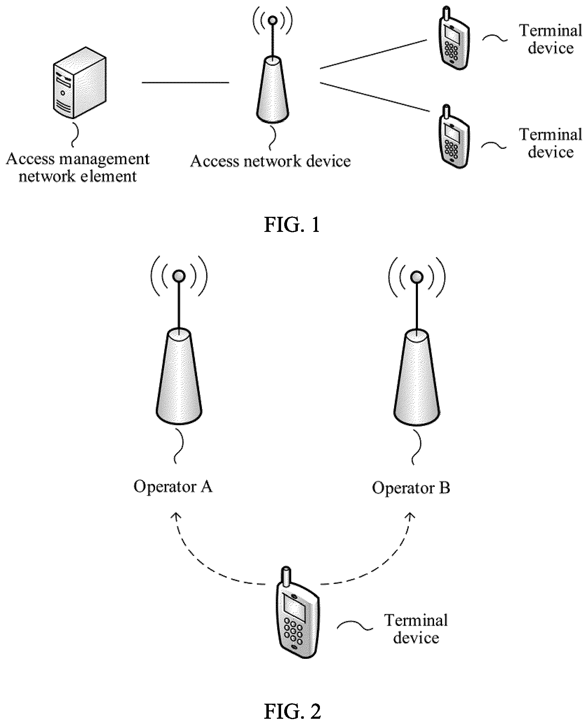

FIG. 1 is a schematic diagram of an architecture of a mobile communication system according to an embodiment of this application. Main devices in embodiments of this application include the following.

A terminal device may be a user equipment (user equipment, UE), a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network. The terminal device and an access network device communicate with each other by using an air interface technology.

An access stratum (access stratum, AS) of the terminal device completes data exchange on a Uu interface by using protocol stacks of various layers. A non-access stratum (non-access stratum, NAS) of the terminal device is used to complete interaction with a core network, which mainly includes mobility management, session management, and the like.

An access network device is a device that provides access for the terminal device, and includes a radio access network (Radio Access Network, RAN) device and an access network (Access Network, AN) device. The RAN device is mainly a wireless network device based on a 3rd Generation Partnership Project (3rd Generation Partnership Project, 3GPP) network, and the AN may be a non-3GPP (non-3GPP) defined access network device. The RAN device is mainly responsible for functions on an air interface side, such as radio resource management, quality of service (Quality of Service, QoS) management, and data compression and encryption. The RAN device may include base stations in various forms, for example, a macro base station, a micro base station (also referred to as a small cell), a relay station, and an access point. In systems that use different radio access technologies, names of a device that has a base station function may be different. For example, the device is referred to as a RAN or a gNB (5G NodeB) in the 5th generation (5th generation, 5G) system, referred to as an evolved NodeB (evolved NodeB, eNB or eNodeB) in the LTE system, and referred to as a NodeB (NodeB) in a 3rd generation (3rd generation, 3G) system.

An access management network element is mainly configured to perform mobility management, access management, and the like. The access management network element may be configured to implement a function, for example, lawful interception or access authorization (or authentication), in mobility management entity (mobility management entity, MME) functions other than session management. In 5G communication, the access management network element may be an AMF network element. In future communication such as 6G communication, the access management network element may still be an AMF network element or have another name. This is not limited in this application.

In embodiments of this application, entities may interact with each other in a message sending manner or a service operation manner. This is not limited in this application. The following description uses the message sending manner as an example.

The following first briefly describes technical concepts in embodiments of this application.
1. Forbidden PLMN: The forbidden PLMN is a PLMN that a terminal device does not automatically attempt to access.
2. Non-forbidden PLMN: The non-forbidden PLMN is a PLMN other than the forbidden PLMN, for example, a home PLMN or a visited PLMN.

There is only one HPLMN of the terminal device, a mobile country code (mobile country code, MCC) and a mobile network code (mobile network code, MNC) in the HPLMN match an MCC and an MNC in an international mobile subscriber identity (international mobile subscriber identity, IMSI), and the IMSI may be extracted from a subscriber identity module (subscriber identity module, SIM) card of the terminal device. For example, as shown in FIG. 2, if a terminal device subscribes to an operator A, the operator A is an HPLMN of the terminal device.

The visited PLMN (Visited PLMN, VPLMN) is a PLMN that can be accessed by the terminal device. An MCC in the VPLMN is the same as the MCC in the IMSI, but an MNC in the VPLMN is different from the MNC in the IMSI. When the terminal device is not within coverage of the HPLMN, the terminal device may choose to register with the VPLMN. For example, as shown in FIG. 2, the terminal device subscribes to the operator A. However, when the terminal device is not within coverage of the operator A, the terminal device may choose to register with an operator B. In this case, the operator B is a VPLMN of the terminal device.

3. PLMN with disaster condition (PLMN with disaster condition): The PLMN with disaster condition is a PLMN on which a disaster or a fault occurs. For example, the PLMN with disaster condition may be the HPLMN or the VPLMN of the terminal device.

4. Disaster roaming PLMN: The disaster roaming PLMN is a PLMN that provides a roaming service for the PLMN with disaster condition, and helps the terminal device perform a normal service. For example, the disaster roaming PLMN is a forbidden PLMN of the terminal device.

5. Base station with abnormal behavior: The base station with abnormal behavior is a base station that can send a broadcast message but cannot provide a normal service for the terminal device. For example, the base station with abnormal behavior may be a base station that is of a non-forbidden PLMN and that is disguised by an attacker, where the attacker may listen to a broadcast message of the forbidden PLMN and disguise as a base station of the non-forbidden PLMN. Alternatively, the base station with abnormal behavior may be a base station of a non-forbidden PLMN on which a disaster occurs. For example, the base station with abnormal behavior only broadcasts a broadcast message, but cannot establish a connection with a core network. It may be understood that the foregoing base station with abnormal behavior is merely an example, and constitutes no limitation on embodiments of this application.

In a mobile communication system, when a terminal device needs to access a network (for example, a mobile phone is powered on or recovers from a scenario without coverage), the terminal device may access a PLMN in an automatic mode or a manual mode. In the foregoing two modes, behavior of the terminal device is different, and network search manners corresponding to the foregoing two modes are also different.

For the manual mode, the terminal device presents, to a user, PLMNs that can be found. The user may manually select a PLMN from the PLMNs that can be found, and the terminal device attempts to register with the PLMN network. In the manual mode, the terminal device lists all PLMNs found in full frequency bands. The PLMNs found by the terminal device include a non-forbidden PLMN and a forbidden PLMN. The user may select a cell of a specific PLMN to which a registration request is to be sent.

For the automatic mode, when the terminal device needs to access the network, in a cell search process, the terminal device may receive at least one broadcast message. The terminal device determines a PLMN selection priority list based on the at least one broadcast message and configuration information. The terminal device performs search based on the PLMN selection priority list in descending order of priorities. Each broadcast message includes a system message (system information block, SIB), where the SIB includes network selection information, and the network selection information includes a PLMN identifier (PLMN ID) (or an MCC and an MNC), and the like. It should be noted that the at least one broadcast message herein may include a broadcast message of the non-forbidden PLMN and a broadcast message of the forbidden PLMN. After receiving each broadcast message, the terminal device cannot directly determine whether the broadcast message is from the forbidden PLMN or the non-forbidden PLMN, and the terminal device needs to determine, in combination with the configuration information, whether the broadcast message is from the forbidden PLMN or the non-forbidden PLMN.

The following describes a network selection process of the terminal device in combination with a plurality of different scenarios.

Scenario 1: There is no PLMN on which a disaster (or a fault) occurs.

Because there is no PLMN on which the disaster occurs in the scenario 1, the foregoing broadcast message does not include a disaster occurrence indication.

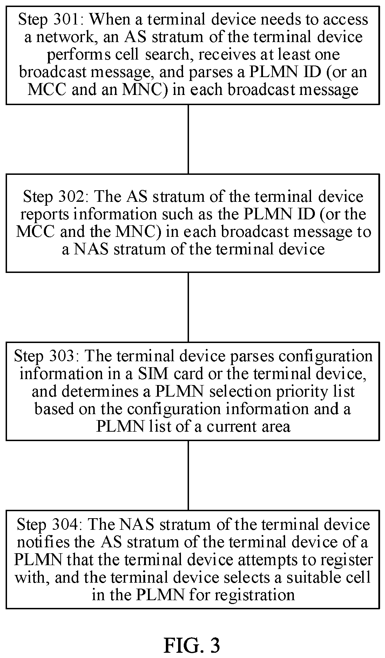

In the scenario 1, a specific process in which the terminal device accesses the network in the automatic mode is shown in FIG. 3.

Step 301: When the terminal device needs to access the network, an AS stratum of the terminal device performs cell search, receives at least one broadcast message, and parses a PLMN ID (or an MCC and an MNC) in each broadcast message.

Step 302: The AS stratum of the terminal device reports information such as the PLMN ID (or the MCC and the MNC) in each broadcast message to a NAS stratum of the terminal device, where the information may be used to determine a PLMN list of a current area.

It may be understood that the PLMN list of the current area herein may include a forbidden PLMN and a non-forbidden PLMN.

Step 303: The terminal device parses configuration information in a SIM card or the terminal device, and determines a PLMN selection priority list based on the configuration information and the PLMN list of the current area. The configuration information includes a list of forbidden PLMNs of the terminal device.

Specifically, the NAS stratum of the terminal device may determine a non-forbidden PLMN in the PLMN list of the current area and a priority of the non-forbidden PLMN based on the configuration information and the PLMN list of the current area, to obtain the PLMN selection priority list. The priority of the non-forbidden PLMN may be predefined.

For example, priorities of PLMNs in the PLMN selection priority list are as follows in descending order:
1. Registered PLMN (registered PLMN, RPLMN), indicating a PLMN that the terminal device has successfully registered with before the terminal device is powered off or disconnected from the network last time.
   For example, the RPLMN may be the same as a home PLMN (home PLMN, HPLMN), or the RPLMN may be different from a home PLMN (home PLMN, HPLMN).
2. Equivalent home PLMN list (equivalent HPLMN list, EHPLMN List): a list of local PLMNs in an equivalent position with a PLMN currently selected by the terminal device, and stored in the SIM card.
3. HPLMN.
4. VPLMN.

It should be noted that the PLMN selection priority list is a set of non-forbidden PLMNs, and the PLMN selection priority list does not include a forbidden PLMN, that is, the terminal device does not select the forbidden PLMN to attempt to register with. The terminal device parses only necessary information of the forbidden PLMN in a cell search phase, such as a PLMN ID and a CAG (close access group, closed access group) ID, but does not parse other information in the forbidden PLMN.

For example, for a terminal device that subscribes to an operator A, the operator A is the HPLMN, an operator B is the VPLMN, and an operator C and an operator D are forbidden PLMNs. In a cell search process, the terminal device receives a broadcast message of the operator A, a broadcast message of the operator B, and a broadcast message of the operator C. Further, the terminal device determines, based on the foregoing three broadcast messages, that the PLMN list of the current area includes the operator A, the operator B, and the operator C. The terminal device determines the PLMN selection priority list based on the configuration information and the PLMN list of the current area. The PLMN selection priority list includes the operator A and the operator B, where a priority of the operator A is higher than a priority of the operator B. The configuration information includes that the forbidden PLMNs of the terminal device are the operator C and the operator D.

Step 304: The NAS stratum of the terminal device notifies the AS stratum of the terminal device of a PLMN that the terminal device attempts to register with, and the terminal device selects a suitable cell (suitable cell) in the PLMN for registration.

Specifically, after establishing a radio link layer connection, the terminal device sends a registration request message to a related network element (for example, an AMF), so that the related network element obtains the registration request message, and another network element in a core network determines whether the terminal device is allowed to access a cell of the PLMN. When the terminal device is not allowed to access the cell, the terminal device receives a reject message, where the reject message may be a registration reject message, an authentication reject message, or the like. The suitable cell herein may be understood as a cell that can provide a normal service (for example, a call or data transmission) for the terminal device.

It may be understood that, if the terminal device fails to register with the cell of the PLMN, the terminal device selects, based on the PLMN selection priority list and in descending order of the priorities, a cell of a next PLMN for registration.

For example, based on the foregoing priority order, the terminal device determines whether an RPLMN exists. If the RPLMN exists, the terminal device attempts to register with the RPLMN. If the registration with the RPLMN fails or the RPLMN does not exist, the terminal device determines whether an equivalent home PLMN list exists. If the equivalent home PLMN list exists, the terminal device attempts to register with a PLMN in the equivalent home PLMN list, to be specific, attempts to perform registration based on the PLMN selection priority list and in descending order of the priorities until the registration succeeds.

Further, if registration with all PLMNs in the PLMN selection priority list fails, the terminal device selects an acceptable cell with good signal quality in any PLMN to camp on, and the terminal device enters a restricted mode. It may be understood that, in the acceptable cell, a service that can be obtained by the terminal device when the terminal device camps on the cell is limited. For example, the service that can be obtained by the terminal device may include initiating an emergency call, or receiving messages from an earthquake and tsunami warning system (earthquake and tsunami warning system, ETWS) message and a commercial mobile alert service (commercial mobile alert system, CMAS). It should be noted that any PLMN herein may be the forbidden PLMN or the non-forbidden PLMN.

Scenario 2: There is a non-forbidden PLMN on which a disaster occurs.

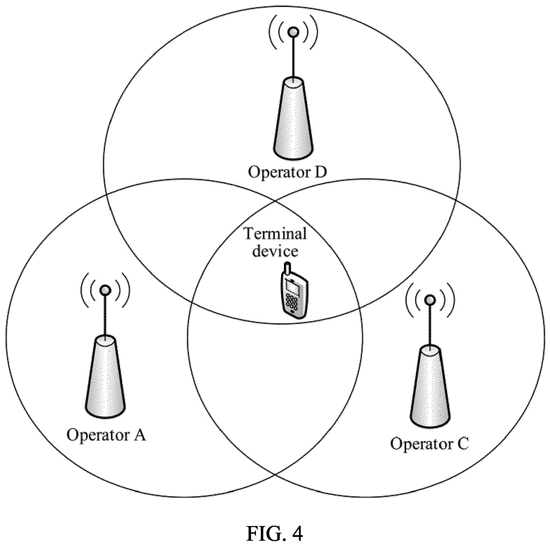

In the scenario 2, only a forbidden PLMN can provide a service in a current area. For example, only one non-forbidden PLMN exists in the current area, and a disaster occurs on the non-forbidden PLMN. Alternatively, a plurality of non-forbidden PLMNs exist in the current area, and disasters occur on all of the plurality of non-forbidden PLMNs. FIG. 4 is used as an example. For a terminal device that subscribes to an operator A, the operator A is an HPLMN, an operator B is a VPLMN, and an operator C and an operator D are forbidden PLMNs. When a disaster occurs on the operator A and a current area is not covered by the operator B, if the operator C and the operator D provide network coverage in the current area, only the operator C and the operator D can provide services in the current area.

Therefore, a broadcast message received by the terminal device is from the forbidden PLMN, and the broadcast message further includes a disaster occurrence indication.

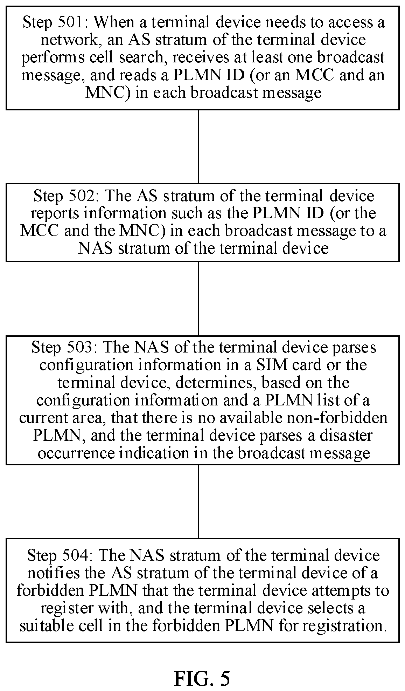

In the scenario 2, the terminal device accesses the network in the automatic mode, as shown in FIG. 5.

For step 501 and step 502, refer to the foregoing step 301 and step 302.

Step 503: The NAS of the terminal device parses configuration information in a SIM card or the terminal device, determines, based on the configuration information and the PLMN list of the current area, that there is no available non-forbidden PLMN, and the terminal device parses a disaster occurrence indication in the broadcast message.

It may be understood that the PLMN list of the current area herein includes only a forbidden PLMN.

Step 504: The NAS stratum of the terminal device notifies the AS stratum of the terminal device of a forbidden PLMN that the terminal device attempts to register with, and the terminal device selects a suitable cell in the forbidden PLMN for registration.

The forbidden PLMN that the terminal device chooses to attempt to register with may be determined in combination with a preconfigured priority list of forbidden PLMNs for disaster roaming or based on a disaster roaming indication in the broadcast message, where the disaster roaming indication indicates a forbidden PLMN that can be selected by the terminal device to perform disaster roaming.

FIG. 4 is used as an example. When the disaster occurs on the operator A and there is no coverage of the operator B, the operator A notifies the operator C and the operator D to provide a temporary disaster roaming service. In this case, the operator C may send the disaster occurrence indication and the disaster roaming indication to the terminal device by using the broadcast message, where the disaster occurrence indication indicates that the disaster occurs on the operator A, and the disaster roaming indication indicates that the operator B can provide the disaster roaming service. When the terminal device performs network selection, the terminal device determines that there is no available non-forbidden PLMN. To be specific, in this case, the terminal device fails to receive broadcast messages of a cell of the operator A and a cell of the operator B. Therefore, the terminal device parses a disaster occurrence indication in a broadcast message from a cell of the operator C, to learn that a fault occurs on the operator A. The terminal device may perform network selection based on the configured priority list of forbidden PLMNs for disaster roaming. For example, in the priority list of forbidden PLMNs for disaster roaming, a priority of the operator D is higher than a priority of the operator C. When there is coverage of the operator D, the terminal device preferentially selects the operator D to attempt to register with, and when there is no coverage of the operator D, the terminal device selects the operator C to attempt to register with. Alternatively, when the operator C broadcasts the disaster roaming indication, the terminal device may select, based on the disaster roaming indication, to attempt to register with the operator C.

Scenario 3: There is a non-forbidden PLMN on which a disaster occurs.

In the scenario 3, the terminal device accesses the network in the automatic mode, as shown in FIG. 3.

When a fault or a disaster occurs on a PLMN with disaster condition, the PLMN with disaster condition notifies a disaster roaming PLMN to send area information of the disaster. In combination with base station deployment and network signal coverage of the disaster roaming PLMN, the disaster roaming PLMN sends a disaster occurrence indication and provides a disaster roaming service in a corresponding area. Because network signal coverage of each PLMN is different, when the terminal device is located at different locations, broadcast messages received by the terminal device are also different. Therefore, the terminal device may be within network coverage of a non-forbidden PLMN other than the disaster roaming PLMN and the PLMN with disaster condition. Alternatively, a UE may be within network coverage of the disaster roaming PLMN and a base station with abnormal behavior. Therefore, in a cell search process, the terminal device receives a broadcast message of the non-forbidden PLMN (for example, the non-forbidden PLMN other than the base station with abnormal behavior or the PLMN with disaster condition) and a broadcast message of the forbidden PLMN, and the terminal device preferentially selects the non-forbidden PLMN for registration. After the registration with the non-forbidden PLMN fails, the terminal device determines that there is no other available non-forbidden PLMN. The terminal device selects an acceptable cell with good signal quality in any PLMN to camp on, and the terminal device enters a restricted mode.

If signal quality of the forbidden PLMN is worse than signal quality of the non-forbidden PLMN, the terminal device does not further parse the broadcast message of the forbidden PLMN. Consequently, the terminal device cannot perceive occurrence of the disaster, and cannot use the disaster roaming PLMN to perform disaster roaming and perform a normal service.

If the signal quality of the forbidden PLMN is good, the terminal device may choose to camp on a cell of the forbidden PLMN. In this case, the terminal device may parse the broadcast message only in the restricted mode, and does not parse a disaster occurrence indication in the broadcast message of the forbidden PLMN, to be specific, does not check a field related to the disaster occurrence indication. If the terminal device does not parse the disaster occurrence indication in the broadcast message of the forbidden PLMN, the terminal device camps on the cell of the forbidden PLMN, and still enters the restricted mode.

Therefore, if the signal quality of the forbidden PLMN is worse than the signal quality of the non-forbidden PLMN, or when the terminal device parses the broadcast message in the restricted mode, the terminal device does not parse the disaster occurrence indication in the broadcast message of the forbidden PLMN. As a result, the terminal device cannot select the forbidden PLMN to perform disaster roaming and perform the normal service, causing service degradation.

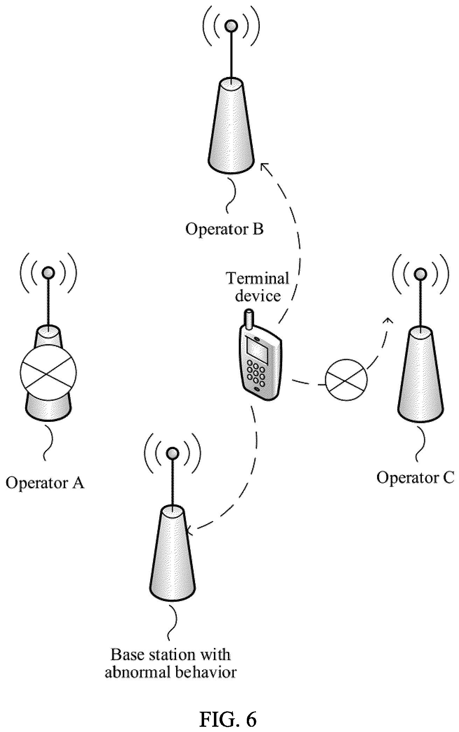

FIG. 6 is used as an example. For a terminal device that subscribes to an operator A, the operator A is an HPLMN, an operator B is a VPLMN, and an operator C is a forbidden PLMN. When a disaster occurs on a network of the operator A, the operator A may notify the operator C to provide a temporary disaster roaming service. In this case, the operator C sends a disaster occurrence indication to the terminal device by using a broadcast message, where the disaster occurrence indication indicates that the disaster occurs on the operator A.

However, a base station with abnormal behavior continues to send a broadcast message to the terminal device, where the broadcast message includes network selection information of the operator A. The base station with abnormal behavior may be a pseudo base station disguised as the operator A, and an attacker may listen to the broadcast message sent by the operator C and disguise as a base station of the operator A. Alternatively, the base station with abnormal behavior may be a base station of the operator A on which the disaster occurs. For example, the base station with abnormal behavior only broadcasts a broadcast message, but cannot establish a connection with a core network.

For another example, if a UE is within network signal coverage of the operator B, the operator B may send a broadcast message to the terminal device, where the broadcast message includes network selection information of the operator B.

The terminal device requests, based on the broadcast message from the base station with abnormal behavior, to register with the base station with abnormal behavior, and/or requests, based on the broadcast message from the operator B, to register with the operator B. Because the operator C is the forbidden PLMN, the terminal device does not select the operator C for registration. When the registration with the base station with abnormal behavior and/or the operator B fails, the terminal device selects the acceptable cell with good signal quality in any PLMN to camp on, and the terminal device enters the restricted mode.

If signal quality of the base station with abnormal behavior is good, and the signal quality of the base station with abnormal behavior is better than signal quality of the operator C, the terminal device chooses to camp on the base station with abnormal behavior, and enters the restricted mode. Similarly, if signal quality of the operator B is good, and the signal quality of the operator B is better than the signal quality of the operator C, the terminal device chooses to camp on the base station with abnormal behavior, and enters the restricted mode. In this case, the terminal device does not read the disaster occurrence indication in the broadcast message of the operator C. As a result, the terminal device cannot select the operator C to roam and perform a normal service, causing service degradation.

If the signal quality of the base station with abnormal behavior or the signal quality of the operator B is worse than the signal quality of the operator C, the terminal device may choose to camp on a cell of the operator C. In this case, when the terminal device reads the broadcast message only in the restricted mode, and does not read the disaster occurrence indication in the broadcast message of the operator C, to be specific, does not check a field related to the disaster occurrence indication, the terminal device cannot select the operator C to roam and perform the normal service, causing service degradation.

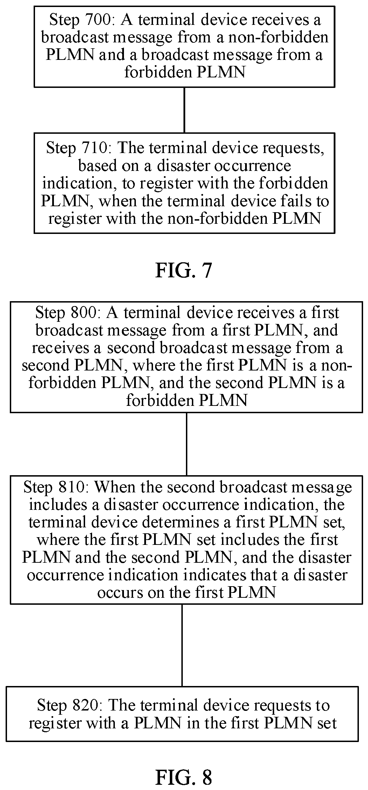

To resolve a problem that service degradation is caused because a terminal device cannot select a forbidden PLMN, an embodiment of this application provides a network selection method. According to the method provided in this embodiment of this application, after the terminal device determines that registration with a non-forbidden PLMN fails, the terminal device does not directly enter a restricted mode, but attempts, based on a disaster occurrence indication included in a broadcast message of the forbidden PLMN, to register with the forbidden PLMN, so that the terminal device selects a network that ensures a normal service. The following uses an embodiment shown in FIG. 7 as an example for description.

Step 700: A terminal device receives a broadcast message from a non-forbidden PLMN and a broadcast message from a forbidden PLMN, where the broadcast message of the forbidden PLMN includes a disaster occurrence indication, and the disaster occurrence indication indicates that a disaster occurs on the non-forbidden PLMN.

It may be understood that, in a cell search process, the terminal device may receive at least one broadcast message. The terminal device may determine a PLMN list of a current area based on the broadcast message received in the cell search process. The terminal device determines at least one non-forbidden PLMN based on the PLMN list of the current area and a configuration message. The terminal device sequentially attempts, based on a priority of the at least one non-forbidden PLMN, to perform registration. For details, refer to the foregoing step 301 to step 303.

There may be one or more broadcast messages of the non-forbidden PLMN.

For example, in the cell search process, the terminal device may receive a broadcast message from a first PLMN, and receive a broadcast message from a third PLMN. The broadcast message of the third PLMN may include a disaster occurrence indication, and the disaster occurrence indication indicates that a disaster occurs on the first PLMN. The terminal device determines, based on configuration information and the broadcast message of the first PLMN, that the first PLMN is a non-forbidden PLMN, and determines, based on configuration information and the broadcast message of the third PLMN, that the third PLMN is a forbidden PLMN. The configuration information includes a list of forbidden PLMNs of the terminal device, and the third PLMN is a forbidden PLMN in the list of forbidden PLMNs of the terminal device. Further, the terminal device may request to register with the first PLMN. For example, the terminal device sends a registration request message to the first PLMN. Because the third PLMN is the forbidden PLMN, the terminal device does not request to register with the third PLMN.

If the terminal device further receives a broadcast message from a second PLMN, and the second PLMN is a non-forbidden PLMN, the terminal device may determine priorities of the first PLMN and the second PLMN based on a preset priority order. If the priority of the first PLMN is higher than the priority of the second PLMN, the terminal device preferentially requests to register with the first PLMN. When the registration with the first PLMN fails, the terminal device requests to register with the second PLMN.

When a disaster occurs on the non-forbidden PLMN, the non-forbidden PLMN sends a notification message to the forbidden PLMN, where the notification message indicates that the disaster occurs on the non-forbidden PLMN. The forbidden PLMN sends the broadcast message based on the notification message, where the broadcast message of the forbidden PLMN includes the disaster occurrence indication. It should be noted that, before the terminal device requests to register with the non-forbidden PLMN, the terminal device parses necessary information in the broadcast message of the non-forbidden PLMN and the broadcast message of the forbidden PLMN, and does not parse the disaster occurrence indication in the broadcast message of the forbidden PLMN.

For example, the broadcast message of the first PLMN may include a first MCC and a first MNC, where the first MCC and the first MNC may be used to determine an identifier of the first PLMN. The broadcast message of the third PLMN may include a second MCC and a second MNC, where the second MCC and the second MNC may be used to determine an identifier of the third PLMN. In this case, the terminal device parses necessary information in broadcast information of the first PLMN and broadcast information of the third PLMN. For example, the terminal device parses the first MCC, the first MNC, the second MCC, and the second MNC, and does not parse the disaster occurrence indication in the broadcast message of the third PLMN.

Step 710: The terminal device requests, based on the disaster occurrence indication, to register with the forbidden PLMN, when the terminal device fails to register with the non-forbidden PLMN.

When the terminal device fails to register the non-forbidden PLMN, the terminal device needs to determine whether the broadcast message of the forbidden PLMN includes the disaster occurrence indication, that is, to parse the disaster occurrence indication in the broadcast message of the forbidden PLMN. When the broadcast message of the forbidden PLMN includes the disaster occurrence indication, the terminal device requests, based on the disaster occurrence indication, to register with the forbidden PLMN.

After the terminal device requests to register with the non-forbidden PLMN, the terminal device determines, based on one or both of the following conditions, that the registration with the non-forbidden PLMN fails: The terminal device receives a response from the non-forbidden PLMN, where the response from the non-forbidden PLMN indicates that the registration with the non-forbidden PLMN fails. Alternatively, the terminal device receives no response from the non-forbidden PLMN within preset duration.

It may be understood that the response from the non-forbidden PLMN may indicate that the registration with the non-forbidden PLMN succeeds, or the response from the non-forbidden PLMN may indicate that the registration with the non-forbidden PLMN fails. When the response from the non-forbidden PLMN may indicate that the registration with the non-forbidden PLMN fails, the terminal device determines that the registration with the non-forbidden PLMN fails. Alternatively, when the terminal device receives no response from the non-forbidden PLMN within the preset duration, the terminal device determines that the registration with the non-forbidden PLMN fails.

For example, the terminal device receives the broadcast message from the first PLMN, and receives the broadcast message from the third PLMN. The terminal device determines that the first PLMN is the non-forbidden PLMN and the third PLMN is the forbidden PLMN. After the terminal device sends the registration request message to the first PLMN, the terminal device receives, from the first PLMN, a response message for the registration request message. For example, when the response message for the registration request message is a registration accept message, the terminal device determines that the registration with the first PLMN succeeds. If the response message for the registration request message is a registration reject message or an authentication reject message, or there is no response message from the first PLMN for long duration, the terminal device determines that the registration with the first PLMN fails.

Further, when the registration with the first PLMN fails and there is no other available non-forbidden PLMN (for example, no broadcast message of another PLMN is received except the broadcast message of the first PLMN), the terminal device determines whether the broadcast message of the third PLMN includes the disaster occurrence indication, that is, the terminal device parses information other than the necessary information in the broadcast message of the third PLMN, where the disaster occurrence indication may indicate that the disaster occurs on the first PLMN.

When the registration with the first PLMN fails, if there is another available non-forbidden PLMN, the terminal device continues to attempt to register with the another available non-forbidden PLMN. When the terminal device determines that registration with all non-forbidden PLMNs fails (for example, registration with all non-forbidden PLMNs corresponding to broadcast messages received by the terminal in the cell search process fails), the terminal device determines whether the broadcast message of the third PLMN includes the disaster occurrence indication, where the disaster occurrence indication may indicate that the disaster occurs on the first PLMN or the another available non-forbidden PLMN.

For example, if the terminal device may further receive the broadcast message from the second PLMN, the second PLMN is the non-forbidden PLMN, and the priority of the first PLMN is higher than the priority of the second PLMN, the terminal device preferentially requests to register with the first PLMN. When the terminal device determines that the registration with the first PLMN fails, the terminal device requests to register with the second PLMN. When the registration with the first PLMN fails and the registration with the second PLMN fails, the terminal device determines whether the broadcast message of the third PLMN includes the disaster occurrence indication, where the disaster occurrence indication may indicate that the disaster occurs on the first PLMN, or the disaster occurs on the second PLMN, or the disaster occurs on both the first PLMN and the second PLMN.

Further, when the broadcast message of the third PLMN includes the disaster occurrence indication, the terminal device requests to register with the forbidden PLMN. Herein, the forbidden PLMN may be the third PLMN or another forbidden PLMN. Otherwise, the terminal device may camp on an acceptable cell whose signal quality meets a preset condition and that is in any PLMN, and enter a restricted mode.

In addition, before the terminal device requests, based on the disaster occurrence indication, to register with the forbidden PLMN, the terminal device may further perform the following several possible determining processes to determine whether to request to register with the forbidden PLMN, so that additional determining and registration attempts of the terminal device in the forbidden PLMN can be avoided, and unnecessary overheads of the terminal device can be reduced.

In a possible implementation, when the terminal device receives the response indicating that the registration with the non-forbidden PLMN fails, the terminal device further needs to perform integrity protection verification on the response indicating that the registration with the non-forbidden PLMN fails. When determining that the integrity protection verification on the response indicating that the registration with the non-forbidden PLMN fails is unsuccessful or that no integrity protection is performed on the response indicating that the registration with the non-forbidden PLMN fails, the terminal device may request, based on the disaster occurrence indication, to register with the forbidden PLMN. When determining that the integrity protection verification on the response indicating that the registration with the non-forbidden PLMN fails succeeds, the terminal device is not triggered to determine whether the broadcast message of the forbidden PLMN includes the disaster occurrence indication. Alternatively, the terminal device ignores the disaster occurrence indication in the broadcast message of the forbidden PLMN. However, the terminal device performs a subsequent operation based on logic in the conventional technology, for example, performs PLMN reselection.

For example, integrity protection verification on the response indicating that the registration with the non-forbidden PLMN fails may be performed by the terminal device by using the following method. First, the terminal device may check whether an available security context is stored. If no available security context is stored, it is considered that the integrity protection verification fails. If the available security context is stored, the security context is used to obtain through calculation whether a message authentication code (message authentication code, MAC) of some integrity-protected information elements in the response indicating that the registration with the non-forbidden PLMN fails matches a MAC' carried in the response indicating that the registration with the non-forbidden PLMN fails. When the MACs match, it is determined that the integrity protection succeeds. Otherwise, it is determined that the integrity protection fails.

Further, when determining that the integrity protection verification on the response indicating that the registration with the non-forbidden PLMN fails is unsuccessful or that no integrity protection is performed on the response indicating that the registration with the non-forbidden PLMN fails, the terminal device further needs to parse a reject cause value carried in the response indicating that the registration with the non-forbidden PLMN fails.

In an example, when determining that the integrity protection verification on the response indicating that the registration with the non-forbidden PLMN fails is unsuccessful or that no integrity protection is performed on the response indicating that the registration with the non-forbidden PLMN fails, the terminal device determines that the reject cause value carried in the response indicating that the registration with the non-forbidden PLMN fails does not include a cause value unrelated to network selection, and the terminal device requests, based on the disaster occurrence indication, to register with the forbidden PLMN. Otherwise, the terminal device is not triggered to determine whether the broadcast message of the forbidden PLMN includes the disaster occurrence indication. Alternatively, the terminal device ignores the disaster occurrence indication in the broadcast message of the forbidden PLMN. The terminal device performs the subsequent operation based on the logic in the conventional technology.

The cause value unrelated to network selection may be a reject cause value 3 or a reject cause value 6.

The reject cause value 3 indicates that the terminal device is an unauthorized terminal device. For example, when the non-forbidden PLMN rejects providing a service for the terminal device, the non-forbidden PLMN sends, to the terminal device, the response indicating that the registration with the non-forbidden PLMN fails, and the response indicating that the registration with the non-forbidden PLMN fails carries the reject cause value 3. A reason why the non-forbidden PLMN rejects providing the service for the terminal device may be that the non-forbidden PLMN does not accept an identity of the terminal device, or the terminal device fails in an identity authentication check. In this case, the terminal device may enter, based on a product implementation, a deactivated state or the restricted mode. It may be understood that, when the terminal device determines that the response indicating that the registration with the non-forbidden PLMN fails includes the reject cause value 3, the terminal device determines that the terminal device is the unauthorized terminal device, and the terminal device may directly enter the deactivated state or enter the restricted mode without additional determining and registration attempts in the forbidden PLMN.

The reject cause value 6 indicates that the terminal device is an unauthorized mobile equipment (mobile equipment, ME). For example, when the non-forbidden PLMN does not accept a used ME, for example, the ME is in a forbidding list, the non-forbidden PLMN sends, to the terminal device, the response indicating that the registration with the non-forbidden PLMN fails, and the response indicating that the registration with the non-forbidden PLMN fails carries the reject cause value 6. In this case, the terminal device considers that a universal subscriber identity module (universal subscriber identity module, USIM) card is invalid in a 5G service, and until the terminal device is powered off or a USIM card in the terminal device is removed, the terminal device deletes a 5G mobility management (mobility management, MM) parameter stored in the ME, for example, a 5G globally unique temporary UE identity (5G globally unique temporary UE identity, 5G-GUTI) and a tracking area identity (tracking area identity, TAI) registered in last access. It may be understood that, when the terminal device determines that the response indicating that the registration with the non-forbidden PLMN fails includes the reject cause value 6, the terminal device determines that the terminal device is the unauthorized ME, and the terminal device may directly enter the deactivated state or enter the restricted mode without additional determining and registration attempts in the forbidden PLMN.

Therefore, when the terminal device determines that the reject cause value carried in the response indicating that the registration with the non-forbidden PLMN fails does not include the cause value unrelated to network selection, to effectively reduce service interruption of the terminal device caused by the disaster that occurs on the non-forbidden PLMN, the terminal device may determine whether the broadcast message of the forbidden PLMN includes the disaster occurrence indication, and when the broadcast message of the forbidden PLMN includes the disaster occurrence indication, request, based on the disaster occurrence indication, to register with the forbidden PLMN.

In another example, when determining that the integrity protection verification on the response indicating that the registration with the non-forbidden PLMN fails is unsuccessful or that no integrity protection is performed on the response indicating that the registration with the non-forbidden PLMN fails, the terminal device determines that the reject cause value carried in the response indicating that the registration with the non-forbidden PLMN fails includes a cause value related to network selection, and determines that there is no other available non-forbidden PLMN, and the terminal device requests, based on the disaster occurrence indication, to register with the forbidden PLMN. Otherwise, the terminal device is not triggered to determine whether the broadcast message of the forbidden PLMN includes the disaster occurrence indication. Alternatively, the terminal device ignores the disaster occurrence indication in the broadcast message of the forbidden PLMN. The terminal device performs the subsequent operation based on the logic in the conventional technology.

The cause value related to network selection may include a reject cause value 11 or a reject cause value 13.

The reject cause value 11 indicates that the terminal device is not allowed to roam in a current PLMN, and the current PLMN herein is the non-forbidden PLMN that sends, to the terminal device, the response indicating that the registration with the non-forbidden PLMN fails. In this case, the terminal device deletes a 5G MM parameter, and may set a PLMN-specific attempt counter (PLMN-specific attempt counter) to a maximum value, that is, no longer attempt to reselect a PLMN. For example, if the PLMN-specific attempt counter is currently set to 2, and the maximum value is 5, when the terminal device determines the response indicating that the registration with the non-forbidden PLMN fails includes the reject cause value 11, the terminal device sets the PLMN-specific attempt counter to 5. It may be understood that, when determining that the response indicating that the registration with the non-forbidden PLMN fails includes the reject cause value 11, the terminal device learns that the terminal device is not allowed to roam in the current PLMN, and the terminal device further determines whether there is another available PLMN. If there is the another available PLMN, the terminal device attempts to register with the another available PLMN. Otherwise, the terminal device determines whether the broadcast message of the forbidden PLMN includes the disaster occurrence indication. When the broadcast message of the forbidden PLMN includes the disaster occurrence indication, the terminal device requests, based on the disaster occurrence indication, to register with the forbidden PLMN. For example, the terminal device sends a PLMN registration request to an operator A, and the operator A sends, to the terminal device, a response indicating that registration with a PLMN fails, where the response indicating that the registration with the PLMN fails includes the reject cause value 11. When the terminal device determines that an operator B exists and the operator B is a non-forbidden PLMN, the terminal device sends the PLMN registration request to the operator B.

The reject cause value 13 indicates that the terminal device is not allowed to roam in a current tracking area (tracking area, TA). The current TA herein is a TA in the non-forbidden PLMN that sends, to the terminal device, the response indicating that the registration with the non-forbidden PLMN fails. In this case, the terminal device may store a current TAI in a roaming-forbidden tracking area list, and perform PLMN reselection. It may be understood that, when determining that the response indicating that the registration with the non-forbidden PLMN fails includes the reject cause value 13, the terminal device learns that the terminal device is not allowed to roam in the current TA, and the terminal device further determines whether there is another available PLMN. If there is the another available PLMN, the terminal device attempts to register with the another available PLMN. Otherwise, the terminal device determines whether the broadcast message of the forbidden PLMN includes the disaster occurrence indication. When the broadcast message of the forbidden PLMN includes the disaster occurrence indication, the terminal device requests, based on the disaster occurrence indication, to register with the forbidden PLMN.

In a possible implementation, the terminal device increases a value of the PLMN-specific attempt counter by 1 each time the terminal device receives the response indicating that the registration with the non-forbidden PLMN fails. When the terminal device determines that the PLMN-specific attempt counter reaches the maximum value, the terminal device requests, based on the disaster occurrence indication, to register with the forbidden PLMN. Otherwise, the terminal device is not triggered to determine whether the broadcast message of the forbidden PLMN includes the disaster occurrence indication. Alternatively, the terminal device ignores the disaster occurrence indication in the broadcast message of the forbidden PLMN.

Further, when determining that the PLMN-specific attempt counter reaches the maximum value, the terminal device may further determine whether there is another available non-forbidden PLMN or a suitable cell (suitable cell). If there is no other available non-forbidden PLMN or no suitable cell, the terminal device requests, based on the disaster occurrence indication, to register with the forbidden PLMN. Otherwise, the terminal device is not triggered to determine whether the broadcast message of the forbidden PLMN includes the disaster occurrence indication. Alternatively, the terminal device ignores the disaster occurrence indication in the broadcast message of the forbidden PLMN. The terminal device performs the subsequent operation based on the logic in the conventional technology, and may enter the deactivated state or enter the restricted mode.

According to the foregoing several possible determining processes, when the terminal device can access the non-forbidden PLMN, additional determining and registration attempts of the terminal device in the forbidden PLMN can be avoided, and unnecessary overheads of the terminal device can be reduced.

It should be noted that the broadcast message of the forbidden PLMN may include the disaster occurrence indication and/or verification information of the disaster occurrence indication in a SIB. The verification information herein may be a hash value or the like. The verification information is for an anti-replay attack or the integrity protection verification. If the terminal device finds the disaster occurrence indication in the broadcast message of the forbidden PLMN and does not need to perform verification on the verification information, or finds the disaster occurrence indication and the verification information of the disaster occurrence indication succeeds in the verification, the terminal device requests to register with the forbidden PLMN. If the terminal device does not find, in the broadcast message of the forbidden PLMN, the disaster occurrence indication or the verification information of the disaster occurrence indication fails in the verification, the terminal device may camp on the acceptable cell whose signal quality meets the preset condition and that is in any PLMN and enter the restricted mode.

In addition, it may be understood that there may also be one or more broadcast messages of the forbidden PLMN. For example, the terminal device may further receive a broadcast message from a fourth PLMN, and the fourth PLMN is a forbidden PLMN. The disaster occurrence indication included in the broadcast message of the third PLMN may be the same as or different from a disaster occurrence indication included in the broadcast message of the fourth PLMN. This is not limited in this application.

Further, the terminal device may detect all broadcast messages from the forbidden PLMNs, or detect some broadcast messages from the forbidden PLMNs. When determining that one of the broadcast messages includes a disaster occurrence indication, the terminal device requests to register with the forbidden PLMN.

For example, the forbidden PLMNs of the terminal device are a PLMN 1 to a PLMN 10, and the terminal device receives a broadcast message from the PLMN 1, a broadcast message from the PLMN 3, and a broadcast message from the PLMN 7.

In an example, the terminal device may determine whether the broadcast message from the PLMN 1 includes a disaster occurrence indication, determine whether the broadcast message from the PLMN 3 includes a disaster occurrence indication, and determine whether the broadcast message from the PLMN 7 includes a disaster occurrence indication. When one of the broadcast messages includes the disaster occurrence indication, the terminal device requests to register with the forbidden PLMN.

Alternatively, in an example, the terminal device may randomly select from the foregoing three broadcast messages to determine whether the broadcast message from the PLMN 1 includes a disaster occurrence indication, and determine whether the broadcast message from the PLMN 7 includes a disaster occurrence indication. When one of the broadcast messages includes the disaster occurrence indication, the terminal device requests to register with the forbidden PLMN.

Alternatively, in an example, the terminal device first determines whether the forbidden PLMNs corresponding to the received broadcast messages belong to a first forbidden PLMN set, where the first PLMN set is a list of forbidden PLMNs for a disaster check. The first forbidden PLMN set includes a forbidden PLMN corresponding to a broadcast message that needs to be detected by the terminal device when the terminal device determines that the registration with the non-forbidden PLMN fails. The first PLMN set is configured by using a preconfiguration method, or is configured through a terminal device configuration update procedure, or is configured by using a NAS message. According to the foregoing method, a range of a broadcast message used by the terminal device to perform the disaster check can be reduced, and a network selection speed can be increased.

For example, if the list of forbidden PLMNs for the disaster check includes the PLMN 1 to the PLMN 5, the terminal device may determine whether the broadcast message from the PLMN 1 includes the disaster occurrence indication, and determine whether the broadcast message from the PLMN 3 includes the disaster occurrence indication. When one of the broadcast messages includes the disaster occurrence indication, the terminal device requests to register with the forbidden PLMN. Because the PLMN 7 does not belong to the list of forbidden PLMNs for the disaster check, the terminal device does not need to determine whether the broadcast message from the PLMN 7 includes the disaster occurrence indication.

In addition, in some embodiments, when the terminal device needs to detect broadcast messages of a plurality forbidden PLMNs, an order of detecting the broadcast messages by the terminal device may be based on signal strength of different forbidden PLMNs, or may be based on a priority list of forbidden PLMNs for the disaster check. It may be understood that the PLMNs in the list of forbidden PLMNs for the disaster check have no priority, and the PLMNs in the priority list of forbidden PLMNs for the disaster check have a priority order.

For example, the forbidden PLMNs of the terminal device are the PLMN 1 to the PLMN 10, and the terminal device receives the broadcast message from the PLMN 1, the broadcast message from the PLMN 3, and the broadcast message from the PLMN 7.

In an example, when signal strength of the PLMN 1 > signal strength of the PLMN 7 > signal strength of the PLMN 3, the terminal device first determines whether the broadcast message from the PLMN 1 includes the disaster occurrence indication, and then determines whether the broadcast message from the PLMN 7 includes the disaster occurrence indication, and finally determines whether the broadcast message from the PLMN 3 includes the disaster occurrence indication.

In an example, the priority list of forbidden PLMNs for the disaster check indicates that a priority of the PLMN 1 > a priority of the PLMN 5 > a priority of the PLMN 4 > a priority of the PLMN 3 > a priority of the PLMN 2. The terminal device first determines whether the broadcast message from the PLMN 1 includes the disaster occurrence indication, and then determines whether the broadcast message from the PLMN 3 includes the disaster occurrence indication, and does not need to determine whether the broadcast message from the PLMN 7 includes the disaster occurrence indication.

In an example, the broadcast message of the forbidden PLMN may include a disaster roaming indication, where the disaster roaming indication indicates that the terminal device may select the forbidden PLMN to perform disaster roaming. In addition, when the terminal device fails to register with the forbidden PLMN, the terminal device may camp on the acceptable cell whose signal quality meets the preset condition and that is in any PLMN, and enter the restricted mode.

In another example, the forbidden PLMN belongs to a second forbidden PLMN set, and the second forbidden PLMN set includes a forbidden PLMN for disaster roaming.

For example, the second forbidden PLMN set may be a list of forbidden PLMNs for disaster roaming. The terminal device may first determine an intersection set of the PLMN list of the current area and the second forbidden PLMN set, and then select any PLMN from the intersection set to request registration. When the registration fails, the terminal device may select another PLMN from the intersection set to attempt to register with. In addition, when the terminal device determines that registration with all PLMNs in the intersection set fails, the terminal device may camp on the acceptable cell whose signal quality meets the preset condition and that is in any PLMN, and enter the restricted mode.

For another example, the second forbidden PLMN set is a priority list of forbidden PLMNs for disaster roaming, and the terminal device may first determine an intersection set of the PLMN list of the current area and the priority list of forbidden PLMNs for disaster roaming. The terminal device sequentially selects a PLMN based on a priority order of PLMNs in the intersection set to request registration. In addition, when the terminal device determines that registration with all PLMNs in the intersection set fails, the terminal device may camp on the acceptable cell whose signal quality meets the preset condition and that is in any PLMN, and enter the restricted mode.

In some embodiments, before the terminal device requests to register with the forbidden PLMN, the terminal device determines that the terminal device supports minimization of service interruption (minimization of service interruption, MINT). The terminal device determines, based on version information of the terminal device or capability information of the terminal device, that the terminal device supports the minimization of service interruption. The version information of the terminal device or the capability information of the terminal device may be stored in a memory or a SIM card of the terminal device.

The version information of the terminal device is an information set of a software or hardware standard of the terminal device. For example, in some versions (for example, versions earlier than a version 3), the terminal device does not support the MINT, and in some versions (for example, the version 3 and some versions later than the version 3), the terminal device supports the MINT. Whether the terminal device supports the MINT is a hardware capability of the terminal device.

The capability information of the terminal device is a set of features supported by the terminal device. The capability information of the terminal device may include radio capability information and core network capability information that are supported by the terminal device. The core network capability information may include a parameter related to the MINT. For example, the parameter related to the MINT may indicate that the terminal device supports the MINT or does not support the MINT. When the parameter related to the MINT indicates that the terminal device supports the MINT, the terminal device determines that the terminal device supports the MINT. When the parameter related to the MINT indicates that the terminal device does not support the MINT, the terminal device determines that the terminal device does not support the MINT.

It should be noted that, when the terminal device determines that the registration with the forbidden PLMN succeeds, the terminal device may camp on a cell of the forbidden PLMN to perform a normal service. When the disaster of the non-forbidden PLMN is relieved, the terminal device may reselect the non-forbidden PLMN.

It should be noted that the forbidden PLMN that sends the disaster occurrence indication may be the same as or different from the forbidden PLMN that the terminal device attempts to register with. Alternatively, the forbidden PLMN corresponding to the broadcast message that includes the disaster occurrence indication and that is parsed by the terminal device may be the same as or different from the forbidden PLMN that the terminal device attempts to register with.

According to the foregoing method, after the registration with all non-forbidden PLMNs fails, the terminal device does not directly enter the restricted mode, but attempts, based on the disaster occurrence indication included in the broadcast message of the forbidden PLMN, to register with the forbidden PLMN, so that the terminal device selects a network that ensures the normal service. Therefore, the service interruption of the terminal device caused by the disaster that occurs on the non-forbidden PLMN can be effectively reduced.

To resolve a problem that service degradation is caused because a terminal device cannot select a forbidden PLMN, an embodiment of this application provides another network selection method. According to the method provided in this embodiment of this application, in a cell search process, the terminal device determines that there is a non-forbidden PLMN on which a disaster occurs, and adds a forbidden PLMN to a first PLMN set, so that the terminal device performs network selection based on the first PLMN set, to ensure that the terminal device implements a normal service. The following uses an embodiment shown in FIG. 8 as an example for description.

Step 800: A terminal device receives a first broadcast message from a first PLMN, and receives a second broadcast message from a second PLMN, where the first PLMN is a non-forbidden PLMN, and the second PLMN is a forbidden PLMN.

Step 810: When the second broadcast message includes a disaster occurrence indication, the terminal device determines a first PLMN set, where the first PLMN set includes a first PLMN and a second PLMN. The disaster occurrence indication indicates that a disaster occurs on the first PLMN.

The first PLMN set may include a PLMN selection priority list and at least one disaster roaming PLMN, and a priority of the at least one disaster roaming PLMN may be lower than a priority of another non-forbidden PLMN.

After the terminal device receives the first broadcast message and the second broadcast message, in addition to parsing necessary information, the terminal device further detects whether the broadcast messages include a disaster occurrence indication. For example, the terminal device may determine the first PLMN set by using, but not limited to, the following two solutions:
Solution 1: After the terminal device receives the first broadcast message and the second broadcast message, the terminal device parses whether each broadcast message includes the disaster occurrence indication, and when the second broadcast message includes the disaster occurrence indication, the terminal device determines the first PLMN set.

For example, an AS stratum of the terminal device performs cell search, and receives the first broadcast message and the second broadcast message. The first broadcast message may include a first MCC and a first MNC, and the first MCC and the first MNC may be used to determine an identifier of the first PLMN. The second broadcast message may include a second MCC, a second MNC, and the disaster occurrence indication, the second MCC and the second MNC may be used to determine an identifier of the second PLMN, and the disaster occurrence indication indicates that the disaster occurs on the first PLMN. In this case, in addition to parsing necessary information in first broadcast information and second broadcast information, for example, parsing the first MCC and the first MNC, and the second MCC and the second MNC, the AS stratum of the terminal device further detects whether the first broadcast message includes the disaster occurrence indication, and detects whether the second broadcast message includes the disaster occurrence indication. The foregoing actions may be performed at the AS stratum or another layer of the terminal device.

Because the second broadcast message includes the disaster occurrence indication, the AS stratum of the terminal device reports the disaster occurrence indication to a NAS stratum of the terminal device, and reports the first MCC, the first MNC, the second MCC, and the second MNC to the NAS stratum of the terminal device.

The NAS stratum of the terminal device parses configuration information in a SIM card or the terminal device, and determines, based on the configuration information and a PLMN list of a current area, that the first PLMN is the non-forbidden PLMN and the second PLMN is the forbidden PLMN. The PLMN list of the current area may be determined based on the first MCC and the first MNC, and the second MCC and the second MNC, and the PLMN list of the current area includes the first PLMN and the second PLMN. The configuration information includes a list of forbidden PLMNs of the terminal device, and the second PLMN is a forbidden PLMN in the list of forbidden PLMNs of the terminal device.

Because the first PLMN is the non-forbidden PLMN, the NAS stratum of the terminal device determines that the first PLMN set includes the first PLMN. Because the second broadcast message includes the disaster occurrence indication, the NAS stratum of the terminal device adds the second PLMN to the first PLMN set. Finally, the first PLMN set includes the first PLMN and the second PLMN, and a priority of the first PLMN may be higher than a priority of the second PLMN. The foregoing actions may be performed at the NAS stratum or another layer of the terminal device.

The AS stratum and the NAS stratum are merely examples, and constitute no limitation on this embodiment of this application.

Solution 2: After the terminal device receives the first broadcast message and the second broadcast message, and after the terminal device determines that the second PLMN is the forbidden PLMN, the terminal device parses whether the second broadcast message includes the disaster occurrence indication, and when the second broadcast message includes the disaster occurrence indication, the terminal device determines the first PLMN set.

For example, an AS stratum of the terminal device performs cell search, and receives the first broadcast message and the second broadcast message. The first broadcast message may include a first MCC and a first MNC, and the first MCC and the first MNC may be used to determine an identifier of the first PLMN. The second broadcast message may include a second MCC, a second MNC, and the disaster occurrence indication, the second MCC and the second MNC may be used to determine an identifier of the second PLMN, and the disaster occurrence indication indicates that the disaster occurs on the first PLMN. The foregoing actions may be performed at the AS stratum or another layer of the terminal device.

In this case, the AS stratum of the terminal device parses only necessary information in first broadcast information and second broadcast information. For example, the terminal device parses the first MCC and the first MNC, and the second MCC and the second MNC.

For example, the AS stratum of the terminal device reports the first MCC, the first MNC, the second MCC, and the second MNC to a NAS stratum of the terminal device.

The NAS stratum of the terminal device parses configuration information in a SIM card or the terminal device, and sends a list of forbidden PLMNs of the terminal device to the AS stratum of the terminal device. The configuration information includes the list of forbidden PLMNs of the terminal device, and the second PLMN is a forbidden PLMN in the list of forbidden PLMNs of the terminal device.

For example, the NAS stratum of the terminal device sends the list of forbidden PLMNs to the AS stratum of the terminal device.

The AS stratum of the terminal device determines, based on the list of forbidden PLMNs of the terminal device, that the second PLMN is the forbidden PLMN, and detects whether the second broadcast message includes the disaster occurrence indication.

For example, because the second broadcast message includes the disaster occurrence indication, the AS stratum of the terminal device reports the disaster occurrence indication to the NAS stratum of the terminal device.

The NAS stratum of the terminal device determines, based on the configuration information and a PLMN list of a current area, that the first PLMN is the non-forbidden PLMN. The PLMN list of the current area may be determined based on the first MCC and the first MNC, and the second MCC and the second MNC, and the PLMN list of the current area includes the first PLMN and the second PLMN.

Because the first PLMN is the non-forbidden PLMN, the NAS stratum of the terminal device determines that the first PLMN set includes the first PLMN. Because the second broadcast message includes the disaster occurrence indication, the NAS stratum of the terminal device adds the second PLMN to the first PLMN set. Finally, the first PLMN set includes the first PLMN and the second PLMN, and a priority of the first PLMN may be higher than a priority of the second PLMN. The foregoing actions may be performed at the NAS stratum or another layer of the terminal device.

The AS stratum and the NAS stratum are merely examples, and constitute no limitation on this embodiment of this application.

Based on the foregoing solution 1 and solution 2, the terminal device may add the second PLMN to the first PLMN set by using, but not limited to, the following examples:
In an example, the second broadcast message further includes a disaster roaming indication, and the disaster roaming indication indicates the terminal device to select the second PLMN to perform disaster roaming. Therefore, when the second broadcast message includes the disaster occurrence indication and the disaster roaming indication, the terminal device adds the second PLMN to the first PLMN set.

In another example, the second PLMN belongs to a list of forbidden PLMNs for disaster roaming. Therefore, when the second broadcast message includes the disaster occurrence indication, the terminal device may add the second PLMN to the first PLMN set. Alternatively, the terminal device may add the forbidden PLMNs for disaster roaming to the first PLMN set. In this case, the first PLMN set may further include a forbidden PLMN for disaster roaming other than the second PLMN.

In addition, that the terminal device adds the second PLMN to the first PLMN set may be understood as that the terminal device adds the second PLMN after a VPLMN in the PLMN selection priority list (that is, the second PLMN serves as a fifth item), or that the terminal device adds the second PLMN to a tail of the VPLMN in the PLMN selection priority list, and does not list the second PLMN as a new item.

Step 820: The terminal device requests to register with PLMNs in the first PLMN set.

In some embodiments, before the terminal device requests to register with the PLMNs in the first PLMN set, the terminal device determines that the terminal device supports minimization of service interruption. The terminal device determines, based on version information of the terminal device or capability information of the terminal device, that the terminal device supports the minimization of service interruption. The version information of the terminal device or the capability information of the terminal device may be stored in a memory or a SIM card of the terminal device.

If the PLMNs in the first PLMN set have a priority order, the terminal device sequentially selects, based on the priority order, a PLMN to attempt to register with.

If the first PLMN set does not include the priority order, the terminal device may randomly select a PLMN to attempt to register with.

In addition, after registration with all the PLMNs in the first PLMN set fails, the terminal device may camp on an acceptable cell whose signal quality meets a preset condition and that is in any PLMN, and enter a restricted mode.

According to the method provided in this embodiment of this application, in the cell search process, the terminal device determines that the broadcast message of the forbidden PLMN includes the disaster roaming indication, and adds the forbidden PLMN to the first PLMN set, so that the terminal device performs network selection based on the first PLMN set, to ensure that the terminal device implements a normal service.

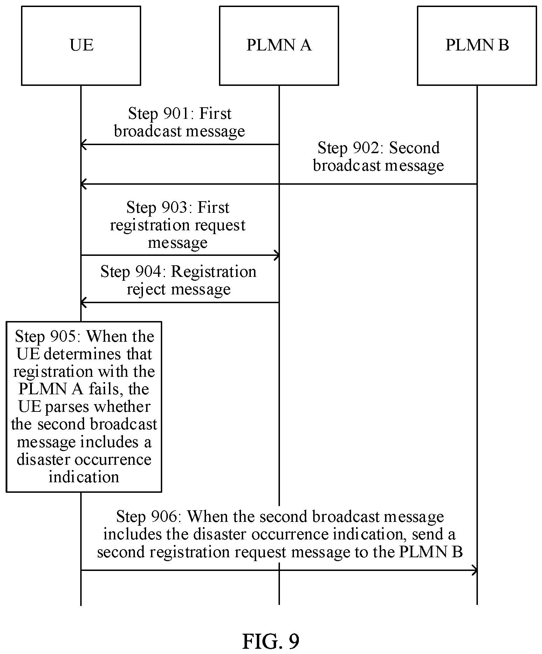

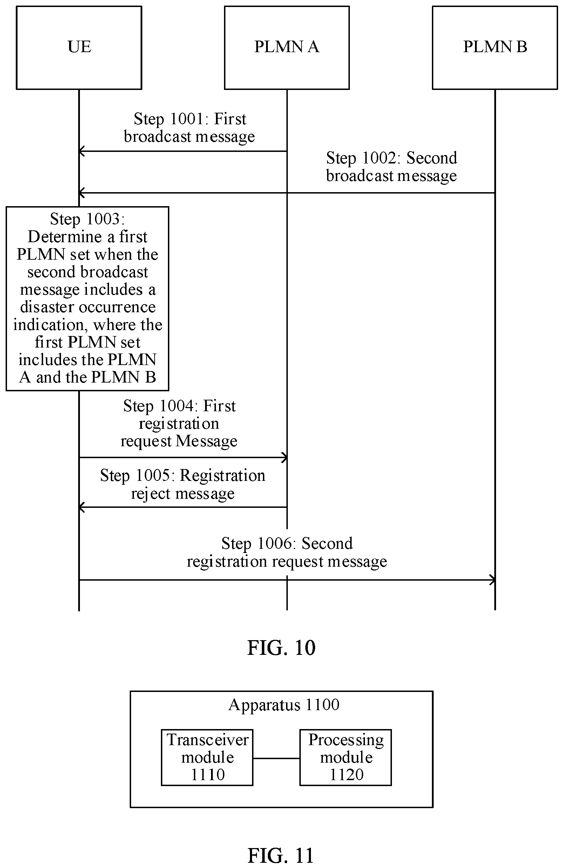

The following further describes the foregoing embodiments by using examples with reference to FIG. 9 and FIG. 10.

An embodiment shown in FIG. 9 corresponds to the embodiment shown in FIG. 7, and a part repeated with the embodiment shown in FIG. 7 is not described in detail again. It is assumed herein that a UE receives only two broadcast messages. A PLMN A is a non-forbidden PLMN, and a PLMN B is a forbidden PLMN.

Step 901: The UE receives a first broadcast message from the PLMN A.

Step 902: The UE receives a second broadcast message from the PLMN B.

It should be noted that the UE receives the first broadcast message and the second broadcast message in a time of cell search, and a time sequence of receiving the first broadcast message and the second broadcast message is not limited in step 901 and step 902. For specific content included in the first broadcast message and the second broadcast message, refer to the foregoing related content of the broadcast message of the non-forbidden PLMN and the broadcast message of the forbidden PLMN. A repeated part is not described in detail again.

Step 903: The UE determines that the PLMN A is the non-forbidden PLMN and the PLMN B is the forbidden PLMN. The UE sends a first registration request message to the PLMN A.

For that the UE determines that the PLMN A is the non-forbidden PLMN and the PLMN B is the forbidden PLMN, refer to the foregoing related content of determining that the PLMN is the forbidden PLMN or the non-forbidden PLMN in FIG. 3, FIG. 5, FIG. 7, and FIG. 8. A repeated part is not described in detail again.

Step 904: The UE receives a registration reject message from the PLMN A.

In addition, it may be understood that step 904 may alternatively be replaced with that the UE receives no response message of the first registration request message for long duration.

Step 905: When the UE determines that registration with the PLMN A fails, the UE parses whether the second broadcast message includes a disaster occurrence indication.

Step 906: When the second broadcast message includes the disaster occurrence indication, the UE sends a second registration request message to the PLMN B.

The second broadcast message includes the disaster occurrence indication, and the disaster occurrence indication indicates that a disaster occurs on the PLMN A.

Therefore, according to the method in the embodiment shown in FIG. 9, after the registration with the PLMN A fails, the UE may not directly enter a restricted mode, but determine whether the second broadcast message includes the disaster occurrence indication. When determining that the disaster occurs on the PLMN A, the UE requests to register with the PLMN B, to ensure that the terminal device implements a normal service.

An embodiment shown in FIG. 10 corresponds to the embodiment shown in FIG. 8, and a part repeated with the embodiment shown in FIG. 8 is not described in detail again. It is assumed herein that a UE receives only two broadcast messages. A PLMN A is a non-forbidden PLMN, and a PLMN B is a forbidden PLMN. A priority of registering with the non-forbidden PLMN by the UE is higher than a priority of registering with the forbidden PLMN by the UE. A PLMN for disaster roaming includes the PLMN B.

For step 1001 and step 1002, refer to the foregoing step 901 and step 902. A repeated part is not described in detail again.

Step 1003: When the second broadcast message includes a disaster occurrence indication, the UE determines a first PLMN set, where the first PLMN set includes the PLMN A and the PLMN B. The second broadcast message includes the disaster occurrence indication, and the disaster occurrence indication indicates that a disaster occurs on the PLMN A.

The UE may determine the first PLMN set by using, but not limited to, the following solution A and solution B:
Solution A: After receiving the first broadcast message and the second broadcast message, the UE parses whether each broadcast message includes a disaster occurrence indication. The UE determines that the second broadcast message includes the disaster occurrence indication and that the PLMN for disaster roaming includes the PLMN B. The UE determines that the first PLMN set includes the PLMN B.

The first PLMN set further includes the PLMN A. For details about the solution A, refer to the related descriptions of the foregoing solution 1. A repeated part is not described in detail again.

Solution B: After the UE receives the first broadcast message and the second broadcast message, and after the UE determines that the PLMN B is the forbidden PLMN, the UE parses whether the second broadcast message includes the disaster occurrence indication. When the second broadcast message includes the disaster occurrence indication and the PLMN for disaster roaming includes the PLMN B, the UE determines that the first PLMN set includes the PLMN B.

The first PLMN set further includes the PLMN A. For details about the solution B, refer to the related descriptions of the foregoing solution 2. A repeated part is not described in detail again.

In addition, because the priority of registering with the non-forbidden PLMN by the UE is higher than the priority of registering with the forbidden PLMN by the UE, a priority of registering with the PLMN A by the UE is higher than a priority of registering with the PLMN B by the UE.

Step 1004: Because the priority of registering with the PLMN A by the UE is higher than the priority of registering with the PLMN B by the UE, the UE preferentially sends a first registration request message to the PLMN A.

Step 1005: The UE receives a registration reject message from the PLMN A.

Because the disaster occurrence indication indicates that the disaster occurs on the PLMN A, the registration with the PLMN A fails.

In addition, it may be understood that step 1005 may alternatively be replaced with that the UE receives no response message of the first registration request message for long duration.

Step 1006: The UE sends a second registration request message to the PLMN B.

Therefore, according to the method in the embodiment shown in FIG. 10, the UE determines that the disaster occurs on the PLMN A, and adds the PLMN B into the first PLMN set, so that the UE performs network selection based on the first PLMN set.

FIG. 11 is a possible example block diagram of an apparatus according to an embodiment of this application. The apparatus 1100 includes a transceiver module 1110 and a processing module 1120. The transceiver module 1110 may include a receiving unit and a sending unit. The processing module 1120 is configured to control and manage an action of the apparatus 1100. The transceiver module 1110 is configured to support the apparatus 1100 in communicating with another network entity. Optionally, the apparatus 1100 may further include a storage unit, and the storage unit is configured to store program code and data of the apparatus 1100.

Optionally, each module in the apparatus 1100 may be implemented by software.

Optionally, the processing module 1120 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The controller/processor may implement or execute various example logical blocks, modules, and circuits described with reference to content disclosed in embodiments of this application. The processor may be a combination of processors implementing a computing function. For example, the processor includes a combination of one or more microprocessors, or a combination of the DSP and a microprocessor. The transceiver module 1110 may be a communication interface, a transceiver, a transceiver circuit, or the like. The communication interface is a general term. In a specific implementation, the communication interface may include a plurality of interfaces, and the storage unit may be a memory.

When the apparatus 1100 is a terminal device or a chip in the terminal device, the processing module 1120 in the apparatus 1100 may support the apparatus 1100 in performing the actions of the terminal device in the foregoing method examples, for example, may support the apparatus 1100 in performing step 710 in FIG. 7 and step 905 in FIG. 9.

The transceiver module 1110 may support the apparatus 1100 in communicating with different PLMNs. For example, the transceiver module 1110 may support the apparatus 1100 in performing step 700 in FIG. 7, step 901, step 902, step 903, step 904, and step 906 in FIG. 9.

For example, details may be as follows:
In an implementation, the apparatus 1100 further includes:

The transceiver module 1110 is configured to receive a broadcast message from a non-forbidden PLMN and a broadcast message from a forbidden PLMN, where the broadcast message of the forbidden PLMN includes a disaster occurrence indication, and the disaster occurrence indication indicates that a disaster occurs on the non-forbidden PLMN.

The processing module 1120 is configured to request, based on the disaster occurrence indication by using the transceiver module 1110, to register with the forbidden PLMN, when registration with the non-forbidden PLMN fails.

In a possible design, the transceiver module 1110 is further configured to request to register with the non-forbidden PLMN.

The processing module 1120 is configured to determine, based on one or both of the following conditions, that the registration with the non-forbidden PLMN fails: A response indicating that the registration with the non-forbidden PLMN fails is received from the non-forbidden PLMN by using the transceiver module 1110. Alternatively, no response is received from the non-forbidden PLMN within preset duration.

In a possible design, the processing unit is configured to: before requesting, based on the disaster occurrence indication, to register with the forbidden PLMN, when the response indicating that the registration with the non-forbidden PLMN fails is received, determine that integrity protection verification on the response indicating that the registration with the non-forbidden PLMN fails is unsuccessful or that no integrity protection is performed on the response indicating that the registration with the non-forbidden PLMN fails.

In a possible design, the processing unit is configured to determine that a reject cause value carried in the response indicating that the registration with the non-forbidden PLMN fails does not include a cause value unrelated to network selection.

In a possible design, the cause value unrelated to network selection is a reject cause value 3 or a reject cause value 6. The reject cause value 3 indicates that the apparatus is an unauthorized terminal device, and the reject cause value 6 indicates that the apparatus is an unauthorized mobile equipment.

In a possible design, the processing unit is configured to determine that a reject cause value carried in the response indicating that the registration with the non-forbidden PLMN fails includes a cause value related to network selection, and determine that there is no other available non-forbidden PLMN.

In a possible design, the cause value related to network selection is a reject cause value 11 or a reject cause value 13. The reject cause value 11 indicates that the apparatus is not allowed to roam in the non-forbidden PLMN, and the reject cause value 13 indicates that the apparatus is not allowed to roam in a current TA in the non-forbidden PLMN.

In a possible design, the processing unit is configured to: before requesting, based on the disaster occurrence indication, to register with the forbidden PLMN, increase a value of a PLMN-specific attempt counter by 1 each time the response indicating that the registration with the non-forbidden PLMN fails is received, and determine that the PLMN-specific attempt counter reaches a maximum value.

In a possible design, the processing unit is configured to determine that there is no other available non-forbidden PLMN.

In a possible design, signal quality of the non-forbidden PLMN is better than signal quality of the forbidden PLMN.

In a possible design, the forbidden PLMN belongs to a first forbidden PLMN set, and the first forbidden PLMN set includes a forbidden PLMN for a disaster check.

In a possible design, the broadcast message of the forbidden PLMN includes a disaster roaming indication, and the disaster roaming indication indicates the apparatus to select the forbidden PLMN to perform disaster roaming.

In a possible design, the forbidden PLMN belongs to a second forbidden PLMN set, and the second forbidden PLMN set includes a forbidden PLMN for disaster roaming.

In a possible design, the processing module 1120 is further configured to: before sending a first registration request message to the forbidden PLMN, determine that the apparatus supports minimization of service interruption.

In a possible design, the processing module 1120 is configured to determine, based on version information of the apparatus or capability information of the apparatus, that the apparatus supports the minimization of service interruption.

In a possible design, the processing module 1120 is configured to: when the registration with the forbidden PLMN fails, camp on an acceptable cell whose signal quality meets a preset condition and that is in any PLMN, and enter a restricted mode.

In a possible design, the broadcast message of the non-forbidden PLMN includes broadcast information of a first PLMN and a broadcast message of a second PLMN.

The processing module 1120 is configured to: when registration with the first PLMN fails and registration with the second PLMN fails, request, based on the disaster occurrence indication by using the transceiver module 1110, to register with the forbidden PLMN.

In a possible design, the processing module 1120 is configured to determine that a priority of accessing the first PLMN is higher than a priority of accessing the second PLMN.

The transceiver module 1110 is configured to: when the registration with the first PLMN fails, request to register with the second PLMN.

It should be understood that the apparatus 1100 in this embodiment of this application may correspond to the terminal device in the foregoing method embodiments, and operations and/or functions of the modules in the apparatus 1100 are respectively used to implement corresponding steps of the method of the terminal device in the foregoing method embodiments. Therefore, beneficial effects in the foregoing method embodiments can also be achieved. For brevity, details are not described herein again.

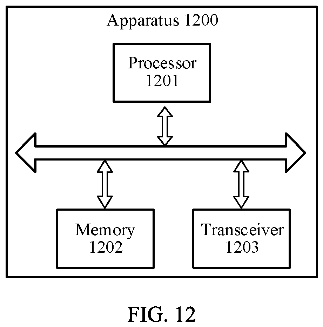

When the processing module 1120 in this embodiment of this application is a processor, and the transceiver module 1110 is a transceiver, the apparatus 1100 in this embodiment of this application may be an apparatus 1200 shown in FIG. 12.

FIG. 12 is a schematic diagram of a structure of a communication apparatus 1200 according to an embodiment of this application. As shown in FIG. 12, the apparatus 1200 includes a processor 1201.

When the apparatus 1200 is a terminal device or a chip in the terminal device, in a possible implementation, the processor 1201 is configured to invoke an interface to perform the following actions:
receiving a broadcast message from a non-forbidden PLMN and a broadcast message from a forbidden PLMN, where the broadcast message of the forbidden PLMN includes a disaster occurrence indication, and the disaster occurrence indication indicates that a disaster occurs on the non-forbidden PLMN; and requesting, based on the disaster occurrence indication, to register with the forbidden PLMN, when registration with the non-forbidden PLMN fails.

It should be understood that the apparatus 1200 may be further configured to perform other steps and/or operations on the terminal device side in the foregoing embodiments. For brevity, details are not described herein.

It should be understood that the processor 1201 may invoke the interface to perform the foregoing receiving and sending actions. The invoked interface may be a logical interface or a physical interface. This is not limited. Optionally, the physical interface may be implemented by using a transceiver. Optionally, the apparatus 1200 further includes a transceiver 1203.

Optionally, the apparatus 1200 further includes a memory 1202. The memory 1202 may store program code in the foregoing method embodiments, to be invoked by the processor 1201.

Specifically, if the apparatus 1200 includes the processor 1201, the memory 1202, and the transceiver 1203, the processor 1201, the memory 1202, and the transceiver 1203 communicate with each other by using an internal connection path, to transfer a control signal and/or a data signal. In a possible design, the processor 1201, the memory 1202, and the transceiver 1203 may be implemented by using a chip, and the processor 1201, the memory 1202, and the transceiver 1203 may be implemented in a same chip, or may be separately implemented in different chips, or functions of any two of the processor 1201, the memory 1202, and the transceiver 1203 are implemented in one chip. The memory 1202 may store program code, and the processor 1201 invokes the program code stored in the memory 1202, to implement a corresponding function of the apparatus 1200.

The methods disclosed in embodiments of this application may be applied to a processor or may be implemented by a processor. The processor may be an integrated circuit chip with a signal processing capability. In an implementation process, the steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or may be a system on chip (system on chip, SoC), or may be a central processing unit (central processing unit, CPU), or may be a network processor (network processor, NP), or may be a digital signal processing circuit (digital signal processor, DSP), or may be a micro controller unit (micro controller unit, MCU), or may be a programmable controller (programmable logic device, PLD) or another integrated chip. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor parses information in the memory and completes the steps in the foregoing methods in combination with hardware of the processor.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAM are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and the methods described in this specification includes but is not limited to these and any memory of another appropriate type.

It should be understood that in embodiments of this application, numbers "first", "second", and the like are merely used to distinguish between different objects, for example, to distinguish between different parameter information or messages, and constitute no limitation on the scope of embodiments of this application. Embodiments of this application are not limited thereto.

It should be further understood that sequence numbers of the foregoing processes do not mean execution orders in embodiments of this application. The execution orders of the processes should be determined based on functions and internal logic of the processes. Numbers or sequence numbers in the foregoing processes are merely for differentiation for ease of description, and should not constitute any limitation on an implementation process of embodiments of this application.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained based on the foregoing rule.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application. However, it should not be considered that this implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate components may or may not be physically separate, and components displayed as units may or may not be physical units, that is, may be located at one place, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When the functions are implemented in the form of a software functional unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network selection method, wherein the method comprises:
receiving, by a terminal device, a broadcast message from a non-forbidden public land mobile network PLMN and a broadcast message from a forbidden PLMN, wherein the broadcast message of the forbidden PLMN comprises a disaster occurrence indication, and the disaster occurrence indication indicates that a disaster occurs on the non-forbidden PLMN; and
requesting, by the terminal device based on the disaster occurrence indication, to register with the forbidden PLMN, when the terminal device fails to register with the non-forbidden PLMN.

2. The method according to claim 1, wherein the method further comprises:
requesting, by the terminal device, to register with the non-forbidden PLMN; and
determining, by the terminal device based on one or both of the following conditions, that the registration with the non-forbidden PLMN fails:
the terminal device receives, from the non-forbidden PLMN, a response indicating that the registration with the non-forbidden PLMN fails, or the terminal device receives no response from the non-forbidden PLMN within preset duration.

3. The method according to claim 2, wherein before the requesting, by the terminal device based on the disaster occurrence indication, to register with the forbidden PLMN, the method further comprises:
when the terminal device receives the response indicating that the registration with the non-forbidden PLMN fails, determining, by the terminal device, that integrity protection verification on the response indicating that the registration with the non-forbidden PLMN fails is unsuccessful or that no integrity protection is performed on the response indicating that the registration with the non-forbidden PLMN fails.

4. The method according to claim 3, wherein the method further comprises:
determining, by the terminal device, that a reject cause value carried in the response indicating that the registration with the non-forbidden PLMN fails does not comprise a cause value unrelated to network selection.

5. The method according to claim 4, wherein the cause value unrelated to network selection is a reject cause value 3 or a reject cause value 6, wherein
the reject cause value 3 indicates that the terminal device is an unauthorized terminal device, and the reject cause value 6 indicates that the terminal device is an unauthorized mobile equipment.

6. The method according to claim 3, wherein the method further comprises:
determining, by the terminal device, that a reject cause value carried in the response indicating that the registration with the non-forbidden PLMN fails comprises a cause value related to network selection, and determining that there is no other available non-forbidden PLMN.

7. The method according to claim 6, wherein the cause value related to network selection is a reject cause value 11 or a reject cause value 13, wherein
the reject cause value 11 indicates that the terminal device is not allowed to roam in the non-forbidden PLMN, and the reject cause value 13 indicates that the terminal device is not allowed to roam in a current tracking area TA in the non-forbidden PLMN.

8. The method according to claim 2, wherein before the requesting, by the terminal device based on the disaster occurrence indication, to register with the forbidden PLMN, the method further comprises:
increasing, by the terminal device, a value of a PLMN-specific attempt counter by 1 each time the terminal device receives the response indicating that the registration with the non-forbidden PLMN fails; and
determining, by the terminal device, that the PLMN-specific attempt counter reaches a maximum value.

9. The method according to claim 8, wherein the method further comprises:
determining, by the terminal device, that there is no other available non-forbidden PLMN.

10. The method according to any one of claims 1 to 9, wherein signal quality of the non-forbidden PLMN is better than signal quality of the forbidden PLMN.

11. The method according to any one of claims 1 to 10, wherein the forbidden PLMN belongs to a first forbidden PLMN set, and the first forbidden PLMN set comprises a forbidden PLMN for a disaster check.

12. The method according to any one of claims 1 to 11, wherein the broadcast message of the forbidden PLMN comprises a disaster roaming indication, and the disaster roaming indication indicates the terminal device to select the forbidden PLMN to perform disaster roaming.

13. The method according to any one of claims 1 to 11, wherein the forbidden PLMN belongs to a second forbidden PLMN set, and the second forbidden PLMN set comprises a forbidden PLMN for disaster roaming.

14. The method according to any one of claims 1 to 13, wherein before the requesting, by the terminal device, to register with the forbidden PLMN, the method further comprises:
determining, by the terminal device, that the terminal device supports minimization of service interruption.

15. The method according to claim 14, wherein the determining, by the terminal device, that the terminal device supports minimization of service interruption comprises:
determining, by the terminal device based on version information of the terminal device or capability information of the terminal device, that the terminal device supports the minimization of service interruption.

16. The method according to any one of claims 1 to 15, wherein the method further comprises:
when the terminal device fails to register with the forbidden PLMN, camping on, by the terminal device, an acceptable cell whose signal quality meets a preset condition and that is in any PLMN, and entering a restricted mode.

17. The method according to any one of claims 1 to 16, wherein the broadcast message of the non-forbidden PLMN comprises broadcast information of a first PLMN and a broadcast message of a second PLMN; and
the requesting, by the terminal device based on the disaster occurrence indication, to register with the forbidden PLMN, when the terminal device fails to register with the non-forbidden PLMN comprises:
when the terminal device fails to register with the first PLMN and the terminal device fails to register with the second PLMN, requesting, by the terminal device based on the disaster occurrence indication, to register with the forbidden PLMN.

18. The method according to claim 17, wherein the method further comprises:
determining, by the terminal device, that a priority of accessing the first PLMN is higher than a priority of accessing the second PLMN; and
when the terminal device fails to register with the first PLMN, requesting, by the terminal device, to register with the second PLMN.

19. A network selection apparatus, wherein the apparatus comprises a transceiver unit and a processing unit, wherein
the transceiver unit is configured to receive a broadcast message from a non-forbidden PLMN and a broadcast message from a forbidden PLMN, wherein the broadcast message of the forbidden PLMN comprises a disaster occurrence indication, and the disaster occurrence indication indicates that a disaster occurs on the non-forbidden PLMN; and
the processing unit is configured to request, based on the disaster occurrence indication by using the transceiver unit, to register with the forbidden PLMN, when registration with the non-forbidden PLMN fails.

20. The apparatus according to claim 19, wherein the transceiver unit is further configured to request to register with the non-forbidden PLMN; and
the processing unit is configured to determine, based on one or both of the following conditions, that the registration with the non-forbidden PLMN fails: a response indicating that the registration with the non-forbidden PLMN fails is received from the non-forbidden PLMN by using the transceiver unit, or no response is received from the non-forbidden PLMN within preset duration.

21. The apparatus according to claim 20, wherein the processing unit is configured to: before requesting, based on the disaster occurrence indication, to register with the forbidden PLMN, when the response indicating that the registration with the non-forbidden PLMN fails is received, determine that integrity protection verification on the response indicating that the registration with the non-forbidden PLMN fails is unsuccessful or that no integrity protection is performed on the response indicating that the registration with the non-forbidden PLMN fails.

22. The apparatus according to claim 21, wherein the processing unit is configured to determine that a reject cause value carried in the response indicating that the registration with the non-forbidden PLMN fails does not comprise a cause value unrelated to network selection.

23. The apparatus according to claim 22, wherein the cause value unrelated to network selection is a reject cause value 3 or a reject cause value 6, wherein the reject cause value 3 indicates that the apparatus is an unauthorized terminal device, and the reject cause value 6 indicates that the apparatus is an unauthorized mobile equipment.

24. The apparatus according to claim 21, wherein the processing unit is configured to determine that a reject cause value carried in the response indicating that the registration with the non-forbidden PLMN fails comprises a cause value related to network selection, and determine that there is no other available non-forbidden PLMN.

25. The apparatus according to claim 24, wherein the cause value related to network selection is a reject cause value 11 or a reject cause value 13, wherein the reject cause value 11 indicates that the apparatus is not allowed to roam in the non-forbidden PLMN, and the reject cause value 13 indicates that the apparatus is not allowed to roam in a current TA in the non-forbidden PLMN.

26. The apparatus according to claim 21, wherein the processing unit is configured to: before requesting, based on the disaster occurrence indication, to register with the forbidden PLMN, increase a value of a PLMN-specific attempt counter by 1 each time the response indicating that the registration with the non-forbidden PLMN fails is received, and determine that the PLMN-specific attempt counter reaches a maximum value.

27. The apparatus according to claim 26, wherein the processing unit is configured to determine that there is no other available non-forbidden PLMN.

28. The apparatus according to claim 19 or 27, wherein signal quality of the non-forbidden PLMN is better than signal quality of the forbidden PLMN.

29. The apparatus according to any one of claims 19 to 28, wherein the forbidden PLMN belongs to a first forbidden PLMN set, and the first forbidden PLMN set comprises a forbidden PLMN for a disaster check.

30. The apparatus according to any one of claims 19 to 29, wherein the broadcast message of the forbidden PLMN comprises a disaster roaming indication, and the disaster roaming indication indicates the apparatus to select the forbidden PLMN to perform disaster roaming.

31. The apparatus according to any one of claims 19 to 29, wherein the forbidden PLMN belongs to a second forbidden PLMN set, and the second forbidden PLMN set comprises a forbidden PLMN for disaster roaming.

32. The apparatus according to any one of claims 19 to 31, wherein the processing unit is further configured to: before sending a first registration request message to the forbidden PLMN, determine that the apparatus supports minimization of service interruption.

33. The apparatus according to claim 32, wherein the processing unit is configured to determine, based on version information of the apparatus or capability information of the apparatus, that the apparatus supports the minimization of service interruption.

34. The apparatus according to any one of claims 19 to 33, wherein the processing unit is configured to: when the registration with the forbidden PLMN fails, camp on an acceptable cell whose signal quality meets a preset condition and that is in any PLMN, and enter a restricted mode.

35. The apparatus according to any one of claims 19 to 34, wherein the broadcast message of the non-forbidden PLMN comprises broadcast information of a first PLMN and a broadcast message of a second PLMN; and
the processing unit is configured to: when registration with the first PLMN fails and registration with the second PLMN fails, request, based on the disaster occurrence indication by using the transceiver unit, to register with the forbidden PLMN.

36. The apparatus according to claim 35, wherein the processing unit is configured to determine that a priority of accessing the first PLMN is higher than a priority of accessing the second PLMN; and
the transceiver unit is configured to: when the registration with the first PLMN fails, request to register with the second PLMN.

37. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 18 by using a logic circuit or by executing code instructions.

38. A computer-readable storage medium, wherein the storage medium stores a computer program or instructions; and when the computer program or the instructions is/are executed by a communication apparatus, the method according to any one of claims 1 to 18 is implemented.

39. A computer program product, wherein the computer program product comprises instructions, and when the instructions are run, the method according to any one of claims 1 to 18 is implemented.
